# EUROPÄISCHE PATENTANMELDUNG

(11) **EP 4 410 159 A1**
(43) Veröffentlichungstag der Anmeldung: **07.08.2024**
(21) Anmeldenummer: 24152350.5
(22) Anmeldetag: 17.01.2024
(51) Int. Cl.: A47J 37/07

(54) **GRILLGERÄT MIT FEUERFESTEM BEHÄLTER UND HÖHENVERSTELLBARER GRILLAUFLAGE**

(30) Priorität: 01.02.2023 DE 102023200816
(71) Anmelder: Kaiser, Thomas, 87463 Dietmannsried (DE); Wassermann, Christian, 87640 Biessenhofen (DE)
(72) Erfinder: Kaiser, Thomas, 87463 Dietmannsried (DE); Wassermann, Christian, 87640 Biessenhofen (DE)
(74) Vertreter: Gille Hrabal Partnerschaftsgesellschaft mbB Patentanwälte

(57) **Zusammenfassung**

Die Erfindung betrifft ein Grillgerät mit einem feuerfesten Behälter (2), mit einer ersten Auflage und mit einer zweiten Auflage (22), wobei die erste Auflage auf den feuerfesten Behälter (2) für die Zubereitung von Grillgut aufgelegt sein kann, wobei die erste Auflage eine Öffnung hat, mit einer Abstandseinrichtung (24), mit der ein Abstand zwischen der ersten und der zweiten Auflage (22) eingestellt werden kann.

Die Erfindung betrifft eine Auflage (22) für ein Grillgerät. Die Auflage (22) weist einen Ring (22a) mit daran befestigten, parallel verlaufenden Stäben (25) auf, wobei ein jeder Stab (25) einen seitlich abstehenden Bolzen (26) umfasst, der in unterschiedlicher Höhe an dem Stab (25) lösbar befestigt werden kann, wobei die Auflage (22) ein auf den Ring (22a) auflegbares flächiges Außenteil (31) umfasst, das im aufgelegten Zustand nach außen von dem Ring (22a) absteht und das eine geschlossene Oberfläche aufweist, und dass die Auflage (22) ein flächiges Innenteil umfasst, das auf den Ring (22a) oder auf an dem Ring (22a) befestigte Stäbe (25) aufgelegt werden kann und das im aufgelegten Zustand nach innen von dem Ring (22a) absteht, wobei das Innenteil ein Grillrost (28) ist.

## Beschreibung

Die Erfindung betrifft ein Grillgerät mit einem feuerfesten Behälter und einer Auflage für Grillgut. Die Erfindung betrifft außerdem eine Auflage für den feuerfesten Behälter.

Ein Grillgerät mit einer halbkugelförmigen Brennkammer ist aus der Druckschrift DE 20 2008 010 398 U1 bekannt. Das Grillgerät umfasst einen Aufsatz sowie einen Grillrost für ein Grillen von Grillgut. Es kann ein Abstand zwischen dem Aufsatz und der Brennkammer eingestellt werden.

Es ist Aufgabe der Erfindung, ein weiter entwickeltes Grillgerät für eine Zubereitung von Grillgut bereitzustellen.

Die Aufgabe der Erfindung wird durch ein Grillgerät mit den Merkmalen des ersten Anspruchs gelöst. Ein Nebenanspruch betrifft zur Lösung der Aufgabe eine Auflage des Grillgeräts. Die abhängigen Ansprüche beziehen sich auf vorteilhafte Ausgestaltungen.

Das zur Lösung der Aufgabe vorgesehene Grillgerät umfasst einen feuerfesten Behälter. Das Grillgerät umfasst eine erste Auflage und eine zweite Auflage. Die erste Auflage kann auf den feuerfesten Behälter aufgelegt werden oder aufgelegt sein, um im Anschluss daran Grillgut auf der ersten Auflage grillen und damit zubereiten zu können. Die erste Auflage hat eine Öffnung. Das Grillgerät umfasst eine Abstandseinrichtung, mit der die zweite Auflage relativ zur ersten Auflage so angeordnet werden kann, dass die zweite Auflage sich über der ersten Auflage befindet und es dann einen Abstand zwischen der ersten und der zweiten Auflage gibt.

Innerhalb des Innenraums des feuerfesten Behälters wird Brennmaterial für eine Zubereitung von Grillgut verbrannt oder verglüht. Als Brennmaterial kann beispielsweise Holz oder Kohle verwendet werden.

Der feuerfeste Behälter kann ganz oder überwiegend aus Metall wie zum Beispiel Stahl oder Gusseisen oder aus anderen Materialien wie Keramik, Stein oder Beton bestehen. Das Metall, der Stein, der Beton oder die Keramik können vollständig oder teilweise beschichtet sein. Metall kann beispielsweise eine Schicht aus Emaille aufweisen. Die Schicht kann eine Antihaftschicht sein, um eine Reinigung zu erleichtern. Es kann sich also um eine Beschichtung handeln, an der andere Substanzen nicht oder kaum haften bleiben.

Die Wandung des feuerfesten Behälters ist grundsätzlich zumindest überwiegend geschlossen und weist dann also keine oder zumindest nur eine sehr geringe Zahl von Öffnungen auf. Die Zahl von Öffnungen in dem feuerfesten Behälter kann zum Beispiel auf fünf oder drei begrenzt sein. Öffnungen in dem feuerfesten Behälter können für eine Zuführung von Luft vorgesehen sein. Die Öffnungen sind grundsätzlich so angeordnet, dass Brennmaterial oder Asche nicht durch die Öffnungen hindurch aus dem feuerfesten Behälter herausfallen können. Die Wandung des feuerfesten Behälters kann aus Stabilitätsgründen wenigstens 0,5 mm dick sein. Die Wandung des feuerfesten Behälters kann insbesondere im Fall von Metall nicht dicker als 2 mm sein, um einen übermäßig großen Materialaufwand und ein übermäßig großes Gewicht zu vermeiden. Der feuerfeste Behälter kann wenigstens 15 cm oder wenigsten 20 cm hoch sein, um einen hinreichend tiefen Innenraum für ein Verbrennen bereitzustellen. Der feuerfeste Behälter kann maximal 50 cm oder maximal 35 cm hoch sein, um einen übermäßig großen Platzbedarf zu vermeiden. Der minimale Durchmesser des feuerfesten Behälters kann wenigstens 40 cm oder wenigstens 50 cm betragen, um einen praktikabel großen Innenraum erhalten zu können. Der maximale Durchmesser des feuerfesten Behälters kann nicht mehr als 100 cm oder nicht mehr als 65 cm betragen, um einen übermäßig großen Platzbedarf zu vermeiden. Das Gewicht des feuerfesten Behälters kann wenigstens 2 kg oder wenigstens 3 kg betragen. Durch ein solches Minimalgewicht kann eine hinreichende Standsicherheit sichergestellt werden. Das Gewicht des feuerfesten Behälters kann nicht mehr als 10 kg oder nicht mehr als 7 kg betragen. Der feuerfeste Behälter kann dann leicht transportiert werden. Der feuersfeste Behälter kann wie ein Quader geformt sein. Der feuersfeste Behälter kann sich zu seiner Öffnung an seiner Oberseite hin kontinuierlich zunehmend verbreitern. Der feuersfeste Behälter kann wie eine Halbkugel geformt sein.

Die erste Auflage und/oder die zweite Auflage können ganz oder überwiegend aus einem Metall wie zum Beispiel Stahl oder Gusseisen bestehen. Die erste Auflage und/oder die zweite Auflage können ganz oder teilweise aus einem anderen feuerfesten Material wie zum Beispiel Keramik, Stein oder Beton bestehen. Die erste Auflage und/oder die zweite Auflage können eine Beschichtung aufweisen, so zum Beispiel eine Antihaftbeschichtung, um ein Anhaften von Grillgut zu vermeiden und/oder um vor nachteilhaften äußeren Einflüssen zu schützen. Die erste Auflage und/oder die zweite Auflage können eine aus Emaille bestehende Beschichtung aufweisen. Die Wandstärke der ersten Auflage und/oder der zweiten Auflage können aus Stabilitätsgründen wenigstens 0,5 cm betragen. Die Wandstärke der ersten Auflage und/oder der zweiten Auflage können nicht mehr als 2 cm oder nicht mehr als 1,5 cm betragen, um einen übermäßig großen Materialaufwand sowie ein übermäßig großes Gewicht zu vermeiden. Der Rand der Öffnung der ersten Auflage kann ringförmig sein. Der Rand der Öffnung der ersten Auflage kann aber auch anders geformt sein, so zum Beispiel quadratisch geformt sein.

Die für ein Auflegen von Grillgut vorgesehene Fläche der ersten und oder der zweiten Auflage kann geschlossen sein, also keine Öffnungen aufweisen. Die für ein Auflegen von Grillgut vorgesehene Fläche kann gitterförmig und somit ein Grillrost sein. Der äußere Rand der ersten Auflage und/oder der zweiten Auflage können ringförmig sein. Der äußere Rand der ersten Auflage und/oder der zweiten Auflage können aber auch anders geformt sein, so zum Beispiel quadratisch geformt sein.

Die erste Auflage kann beispielsweise auf einen oberen Rand des feuerfesten Behälters aufgelegt werden. Der feuerfeste Behälter kann beim oberen Rand eine umlaufende Stufe aufweisen, auf der die erste Auflage aufgelegt werden kann. Der feuerfeste Behälter kann sich aushegend von seiner an der Oberseite vorhandenen Öffnung verjüngen. Die erste Auflage kann aufgrund der Verjüngung gehalten sein und zwar nahe bei der Oberseite des feuerfesten Behälters.

Grundsätzlich kann die erste Auflage durch Anheben von dem feuerfesten Behälter gelöst werden. Die erste Auflage des Grillgeräts weist eine so dimensionierte Oberfläche auf, dass Grillgut wie zum Beispiel üblich große Würste, üblich große Steaks oder Gemüse auf die Oberfläche verliersicher für ein Grillen gelegt werden können. Der minimale Durchmesser der ersten Auflage kann wenigstens 40 cm oder wenigstens 50 cm betragen, um eine praktikabel große Grillfläche erhalten zu können. Der maximale Durchmesser der ersten Auflage kann nicht mehr als 100 cm oder nicht mehr als 65 cm betragen, um einen übermäßig großen Platzbedarf zu vermeiden. Die erste Auflage kann eine wenigstes 10 cm oder wenigstens 14 cm breite, umlaufende Fläche aufweisen, um eine praktikabel große Fläche für ein Auflegen von Grillgut erhalten zu können. Die Fläche kann also bahnförmig sein. Die Breite der umlaufenden Fläche bzw. die Breite der umlaufenden Bahn kann auf 30 cm oder 25 cm beschränkt sein, damit die erste Auflage eine für eine Luftzufuhr hinreichend große Öffnung haben kann. Mit Breite der umlaufenden Fläche bzw. Bahn ist der Abstand zwischen dem äußeren Rand der ersten Auflage und dem äußeren Rand der Öffnung der ersten Auflage gemeint. Die erste Auflage kann am Außenrand der Fläche bzw. der Bahn eine umlaufende Erhebung nach oben und/oder nach unten aufweisen, durch die vermieden werden kann, dass Fett nach außen fließen kann. Alternativ oder ergänzend kann durch die umlaufende Erhebung ein Verrutschen der ersten Auflage relativ zum feuerfesten Behälter vermieden werden, wenn die erste Auflage auf den feuerfesten Behälter aufgelegt und die Erhebung nach unten gerichtet ist.

Die erste Auflage kann aus zwei oder mehr Teilen bestehen, die unabhängig voneinander auf den feuerfesten Behälter für ein Grillen gelegt werden können. Die erste Auflage kann aus zwei gleichen Teilen bestehen. Zwei Teile der ersten Auflage können verschieden sein. So kann ein Teil ein Grillrost sein und das andere Teil eine geschlossene Oberfläche aufweisen. Ein Grillrost kann beispielsweise aus Stahl oder aus Gußeisen bestehen.

Eine Auflage besteht aus mehreren Teilen, wenn es wenigstens zwei Teile einer Auflage gibt, die nicht fest miteinander verbunden sind und auch nicht fest miteinander verbunden werden sollen.

Die Öffnung der ersten Auflage kann einen minimalen Durchmesser von wenigstens 4 cm oder wenigstens 6 cm oder wenigstens 8 cm aufweisen, um hinreichend Luft dem feuerfesten Behälter zuführen zu können. Die Öffnung der ersten Auflage kann einen maximalen Durchmesser von nicht mehr als 20 cm oder nicht mehr als 14 cm aufweisen, um ein günstiges Verhältnis zwischen der Grillfläche und der Öffnung der ersten Auflage erhalten zu können.

Grundsätzlich steht die erste Auflage nicht seitlich von dem feuerfesten Behälter ab, um problematische seitliche Vorsprünge zu vermeiden. Der maximale Durchmesser der ersten Auflage ist daher vorzugsweise nicht größer als der maximale Durchmesser des feuerfesten Behälters. Der maximale Durchmesser der ersten Auflage und der maximale Durchmesser des feuerfesten Behälters können gleich sein. Der Durchmesser der ersten Auflage kann dem maximalen Durchmesser des feuerfesten Behälters entsprechen.

Ist die erste Auflage auf den feuerfesten Behälter aufgelegt, so kann im Anschluss daran Grillgut auf die erste Auflage gelegt werden. Das aufgelegte Grillgut kann gegrillt und damit zubereitet werden. Um Grillen zu können, wird in dem feuerfesten Behälter befindliches Brennmaterial wie Kohle oder Holz entzündet.

Die zweite Auflage ist so, dass zumindest ein Zubereitungsgefäß wie zum Beispiel ein Wok auf die zweite Auflage ausgesetzt oder in die zweite Auflage eingesetzt werden kann, um in dem Zubereitungsgefäß Grillgut zubereiten zu können. Die zweite Auflage muss daher nicht zwingend eine Fläche aufweisen, die für ein Auflegen von Grillgut hinreichend groß dimensioniert ist. Die zweite Auflage kann daher nur aus einem Ring bestehen, in den ein Zubereitungsgefäß eingesetzt werden kann oder eingesetzt ist.

Die zweite Auflage des Grillgeräts kann wie die erste Auflage eine so dimensionierte Oberfläche aufweisen, dass Grillgut wie zum Beispiel üblich große Würste, üblich große Steaks oder Gemüse auf die Oberfläche verliersicher für ein Grillen gelegt werden können.

Der minimale Durchmesser der ersten Auflage kann wenigstens 20 cm oder wenigstens 30 cm betragen, um eine praktikabel große Grillfläche erhalten zu können und/oder um ein praktikabel großes Zubereitungsgefäß in eine dafür geeignet große Öffnung einsetzen zu können. Der maximale Durchmesser der ersten Auflage kann nicht mehr als 75 cm oder nicht mehr als 50 cm betragen, um einen übermäßig großen Platzbedarf zu vermeiden.

Eine Öffnung der zweiten Auflage kann gleich groß oder zumindest im Wesentlichen gleich groß sein wie die Öffnung der ersten Auflage. Der maximale Durchmesser der zweiten Auflage kann kleiner sein als der maximale Durchmesser der ersten Auflage. Grillgut auf der ersten Auflage bleibt damit leicht erreichbar. Der Durchmesser der zweiten Auflage kann ein oder mehrere Zentimeter kleiner sein als der maximale Durchmesser des feuerfesten Behälters. Der Durchmesser der zweiten Auflage kann wenigstens 4 cm oder wenigstens 8 cm kleiner sein als der maximale Durchmesser des feuerfesten Behälters.

Eine Öffnung der zweiten Auflage kann sich während des Betriebs genau oberhalb der Öffnung der ersten Auflage befinden, um eine Zufuhr von Hitze zu einem in die Öffnung eingesetzten Zubereitungsgefäß zu optimieren.

Aufgrund der Abstandseinrichtung kann es während des Betriebs, also während eines Grillvorgangs, einen Abstand zwischen der zweiten Auflage und der ersten Auflage geben. Es gibt damit für ein Grillen vorgesehene Flächen, die aufgrund des Abstands unterschiedlich stark erhitzt werden, wenn Brennmaterial während des Betriebs im feuerfesten Behälter verbrennt oder verglüht. Da die zweite Auflage durch die Abstandseinrichtung auf die erste Auflage gestellt werden kann, kann die zweite Auflage von der ersten Auflage jederzeit durch Anheben gelöst werden.

Die Abstandseinrichtung kann ein oder mehrere Stäbe umfassen. Ein jeder Stab kann sich während des Betriebs von der ersten Auflage zur zweiten Auflage erstrecken und so einen Abstand zwischen der ersten Auflage und der zweiten Auflage schaffen. Bevorzugt gibt es genau drei Stäbe, um Standsicherheit mit minimierten Materialaufwand erreichen zu können. Mit Stab ist ein steifer und zumindest überwiegend gerader Körper gemeint, dessen Länge groß gegenüber seinen übrigen Abmessungen und der sich daraus ergebenden Querschnittsfläche ist. Ein oder mehrere Stäbe der Abstandseinrichtung können während des Betriebs auf die Oberfläche der ersten Auflage gestellt sein. Ein oder mehrere Stäbe der Abstandseinrichtung können jeweils einen Fuß umfassen, der während des Betriebs auf die Oberfläche der ersten Auflage gestellt sein kann. hitzebeständigen Behälters lösbar an seinem Stab befestigt sein. hitzebeständigen Behälters kann vorzugsweise in unterschiedlichen Höhen an seinem Stab befestigt werden, um einen Abstand zwischen der ersten und der zweiten Auflage zur Regulierung einer Wärmezufuhr verändern zu können. Die Abstandseinrichtung kann beispielsweise einen kreisförmigen Ring oder ein Rechteck als Fuß umfassen, an dem ein Stab der Abstandseinrichtung lösbar befestigt sein kann. Ein Fuß kann aus einem Blech bestehen oder ein Blech umfassen. Mit Fuß ist ein Teil der Abstandseinrichtung gemeint, das für einen Betrieb auf die erste Auflage gestellt werden kann.

Ein Fuß kann formschlüssig und/oder kraftschlüssig lösbar mit seinem Stab verbunden sein. Ein Fuß kann durch eine Rastverbindung, Schraubverbindung oder Bajonettverbindung lösbar mit seinem Stab verbunden sein.

Ein Fuß kann ein Bolzen sein oder einen Bolzen umfassen. Der Querschnitt eines Bolzens kann beispielsweise rund oder eckig sein. Ein jeder Bolzen ist um ein Vielfaches kürzer als ein Stab. Von jedem Stab kann ein Bolzen abstehen. Die Stäbe und die Bolzen können so angeordnet sein, dass die Bolzen auf den Rand der Öffnung der ersten Auflage aufgelegt werden können und die Beine dann in die Öffnung der ersten Auflage hineinreichen. Ein jeder Bolzen kann höhenverstellbar an seinem Stab befestigt sein, um unterschiedliche Abstände zwischen der ersten und der zweiten Auflage einstellen zu können. Ein Bolzen kann durch eine Schraubverbindung lösbar mit dem Stab befestigt sein. Ein Ende eines Bolzens kann ein Außengewinde aufweisen, das in ein Innengewinde des Stabs hineingeschraubt werden kann. Ein Bolzen kann eine konische Verjüngung aufweisen, die an einer korrespondierenden konischen Form im Stab dicht anliegt, wenn der Bolzen an dem Stab befestigt ist. Die mechanische Belastbarkeit der Verbindung zwischen dem Bolzen und dem Stab kann durch solche konischen Verjüngungen verbessert werden.

Ein jeder Bolzen und/oder ein jeder Stab können aus Stabilitätsgründen und aus Gründen der Hitzebeständigkeit aus Metall, so zum Beispiel aus Stahl, bestehen. Ein jeder Bolzen und/oder ein jeder Stab können aus Stabilitätsgründen einen minimalen Durchmesser von wenigstens 0,5 cm oder wenigstens 1 cm aufweisen. Ein jeder Bolzen und/oder ein jeder Stab können aus Gründen der Materialersparnis einen maximalen Durchmesser von nicht mehr als 4 cm oder nicht mehr als 3 cm aufweisen.

Ein Bolzen ist ein langegestreckter Gegenstand. Seine Länge ist deutlich kürzer als die Länge seines Stabs. Ein Stab kann beispielsweise wenigsten dreimal oder wenigstens viermal oder wenigstens fünfmal länger als ein Bolzen sein. Ein Bolzen kann wenigstens 1 cm und/oder maximal 10 cm lang sein. Ein Stab kann wenigstens 5 cm und/oder maximal 40 cm lang sein.

Die zweite Auflage kann aus einer Mehrzahl von nicht miteinander fest verbundenen Teilen bestehen, wobei ein Teil ein Grillrost ist, der so in eine Öffnung der zweiten Auflage eingesetzt sein kann, dass Streben des Grillrostes bei Stäben der Abstandseinrichtung enden und/oder auf Stäben der Abstandseinrichtung aufliegen. Kräfte, die auf die Streben ausgeübt werden, können so unmittelbar in die Stäbe eingeleitet werden. Ein Grillrost kann ringförmig verlaufende Rippen umfassen. Die ringförmig verlaufenden Rippen können durch Streben miteinander verbunden sein. Solche verbindenden Streben weisen Enden auf, die vorteilhaft bei den Stäben enden oder zumindest auf den Stäben aufliegen. Es können nur drei solcher Streben vorhanden sein, die ringförmig verlaufende Rippen des Grillrostes miteinander verbinden. Es gibt dann wenigstens drei Stäbe und zwar vorzugsweise nur drei Stäbe. Die Streben, die ringförmig verlaufende Rippen des Grillrostes miteinander verbinden, können mit den ringförmig verlaufenden Rippen einen rechten Winkel einschließen. Die Streben, die ringförmig verlaufende Rippen des Grillrostes miteinander verbinden, können untereinander gleiche Abstände aufweisen. Die Streben, die ringförmig verlaufende Rippen des Grillrostes miteinander verbinden, können sich ausgehend vom äußeren Rand geradlinig in Richtung Mittelpunkt des Grillrostes erstrecken. Die ringförmig verlaufenden Rippen des Grillrostes können untereinander gleiche Abstände aufweisen.

Es kann eine Ausrichthilfe vorgesehen sein, damit der Grillrost intuitiv so eingesetzt wird, dass Enden von Streben des Grillrostes bei Stäben der Abstandseinrichtung enden.

Der Grillrost kann an seiner Unterseite als Ausrichthilfe eine Mulde aufweisen, in die eine Erhebung eines Teils der zweiten Auflage hineinreichen kann. Der Grillrost kann an seiner Unterseite als Ausrichthilfe eine Erhebung aufweisen, die eine Mulde eines Teils der zweiten Auflage hineinreichen kann. Es können mehrere, zum Beispiel gleichmäßig verteilte Mulden und mehrere Erhebungen als Ausrichthilfe vorgesehen sein. Befindet sich eine Erhebung in einer Mulde, so endet ein Ende einer Strebe des Grillrostes bei einem Stab der Abstandseinrichtung oder liegt zumindest auf dem Stab auf.

Die zweite Auflage kann einen Ring umfassen. Der Ring ist gleichmäßig runder Gegenstand mit einer zentralen Öffnung. Die Breite des Bereichs des Rings, der in Aufsicht auf die Öffnung des Rings um seine Öffnung herum verläuft, ist um ein Mehrfaches kleiner im Vergleich zum Durchmesser des Rings. Diese Breite des Bereichs kann aus Gründen der Stabilität wenigstens 0,5 cm und/oder aus Gründen der Materialersparnis maximal 6 cm oder maximal 4 cm oder maximal 3 cm betragen. Die Öffnung des Rings kann einen Durchmesser von wenigstens 10 cm oder wenigstens 15 cm aufweisen. Die Öffnung des Rings kann einen Durchmesser von weniger als 25 cm oder weniger als 20 cm aufweisen, um üblich große Zubereitungsgefäße einsetzen zu können. Der Ring kann vollständig oder überwiegend aus Stahl oder Gusseisen bestehen. Der Stahl bzw. das Gusseisen können beschichtet sein. Die Schicht kann eine Antihaftschicht sein, um Verschmutzungen zu vermeiden bzw. leicht vom Ring lösen zu können. Die Schicht kann aus Emaille bestehen. Der Ring kann auch aus anderen feuerfesten Materialien wie Beton bestehen.

Die zweite Auflage kann zusätzlich zum Ring weitere Teile umfassen, die auf dem Ring abgelegt werden können und/oder an dem Ring eingehängt werden können. Zusätzliche Teile der zweiten Auflage können so flexibel in Abhängigkeit vom Bedarf für ein Grillen eingesetzt werden. Sollen beispielsweise nur die erste Auflage und ein Zubereitungsgefäß für eine Zubereitung von Grillgut oder anderen Lebensmitteln genutzt werden, dann genügt der Ring für ein Einsetzen eines Zubereitungsgefäßes in den Ring. Die erste Auflage ist dann besonders leicht erreichbar, da keine weiteren Teile der zweiten Auflage die Erreichbarkeit stören.

Die Abstandseinrichtung kann beispielsweise an dem Ring der zweiten Auflage dauerhaft oder lösbar befestigt sein. Die Abstandseinrichtung kann mit einer oder mehreren Schraubverbindungen an dem Ring der zweiten Auflage befestigt sein. Die Abstandseinrichtung kann an dem Ring beispielsweise angeschweißt sein. Auch eine einteilige Fertigung von Ring und Teilen der Abstandseinrichtung ist möglich. Aus Transportgründen ist aber eine lösbare Verbindung zu bevorzugen.

Die zweite Auflage kann ein auf den Ring auflegbares oder am Ring einhängbares flächiges Außenteil umfassen, das im aufgelegten Zustand nach außen von dem Ring absteht. Auf das Außenteil kann Grillgut für ein Grillen gelegt werden Das Außenteil kann eine umlaufende Bahn aufweisen, die um eine Öffnung herum verläuft. Eine solche umlaufende Bahn kann wenigstes 10 cm oder wenigstens 14 cm breit sein, um eine praktikabel große Grillfläche erhalten zu können. Die Breite der umlaufenden Bahn kann aus Gründen der Luftzufuhr auf 20 cm oder 15 cm beschränkt sein. Das Außenteil kann am Außenrand eine umlaufende Erhebung aufweisen, durch die vermieden werden kann, dass Fett während des Grillens nach außen abfließen kann. Die Erhebung kann stufenförmig sein. Die Bahn kann eine geschlossene Oberfläche aufweisen. Das Außenteil kann durch Anheben von dem Ring gelöst werden. Das Außenteil kann vorzugsweise flächig auf dem Ring aufliegen, so dass im Idealfall kein Spalt zwischen dem Außenteil und dem Ring verbleibt. Fett, welches nach Innen fließt, wird dann vorteilhaft in die Öffnung der ersten Auflage hineinfließen und innerhalb des feuerfesten Behälters aufgefangen werden. Ein anderer Fluss von Fett durch einen Spalt zwischen Ring und Außenteil auf die Oberfläche der ersten Auflage wird so vorteilhaft vermieden oder zumindest minimiert.

Das Außenteil kann eine zentrale Öffnung aufweisen. Sind Stäbe an der Innenseite des Rings befestigt, dann können diese Stäbe in die zentrale Öffnung hineinreichen. Es kann so vermieden werden, dass das Außenteil von dem Ring herunterrutschen kann.

Der Durchmesser der zentralen Öffnung des Außenteils kann größer sein als der Durchmesser der Öffnung des Rings. Liegt das Außenteil auf dem Ring auf, dann wird der von oben sichtbare Übergang von dem Außenteil zum Ring beispielsweise durch eine umlaufende Stufe gebildet. Die Stufe kann verschiedene Vorteile haben. Es ist beispielsweise möglich, dass in die so gebildete Stufe ein Innenteil der zweiten Auflage hineingelegt werden kann. Stäbe können durch den Rand der zentralen Öffnung hindurchreichen und an der Rand angrenzen, um die Lage des Außenteils zu stabilisieren.

Die zweite Auflage kann ein auf den Ring auflegbares oder am Ring einhängbares, flächiges Innenteil umfassen, das im aufgelegten Zustand nach innen von dem Ring absteht. Auf das Innenteil kann Grillgut für ein Grillen gelegt werden. Das Innenteil liegt vorzugsweise nur auf Stäben der Abstandseinrichtung auf, wenn Stäbe der Abstandseinrichtung am Ring befestigt sind. Stäbe sind dann bevorzugt an der Innenseite des Rings befestigt, so zum Beispiel mithilfe einer Schraube. Die Schraube kann einen Innensechskant umfassen. Stäbe erfüllen bei dieser Ausgestaltung vorteilhaft eine Doppelfunktion. Im Fall von nur drei Stäben liegt dann das Innenteil vorteilhaft nur auf drei Punkten und damit zuverlässig ohne Spiel auf. Es können auch vier Stäbe vorgesehen sein. Zwar kann dann aufgrund von Fertigungstoleranzen ein Spiel, also ein geringer Abstand, zwischen dem flächigen Innenteil und einer punktförmigen Auflage auftreten. Eine Vierpunktauflage kann aber die Stabilität verbessern. Benachbarte Stäbe weisen bevorzugt untereinander gleich Abstände auf, damit das Innenteil besonders stabil aufliegen kann.

Alternativ kann der Ring beispielsweise punktförmige Erhebungen aufweisen, auf denen das Innenteil während eines Grillvorgangs, also während des Betriebs für die Zubereitung einer Speise punktförmig aufliegen kann. Benachbarte punktförmige Erhebungen weisen untereinander bevorzugt gleiche Abstände auf. Es können beispielsweise drei oder vier Punkte als Auflage für das Innenteil vorgesehen sein. Diese Lösung ist im Vergleich zu den Stäben mit dem Nachteil verbunden, punktförmige Erhebungen zusätzlich fertigen zu müssen.

Das Innenteil und das Außenteil können vorzugsweise unabhängig voneinander auf den Ring aufgelegt werden bzw. auf Stäbe, die am Ring angebracht sind. Es kann also zuerst das Innenteil auf den Ring oder auf am Ring angebrachte Stäbe gelegt werden. Im Anschluss daran kann das Außenteil auf den Ring oder auf das Innenteil gelegt werden. Es kann alternativ zuerst das Außenteil auf den Ring gelegt werden. Im Anschluss daran kann das Innenteil auf den Ring oder auf am Ring angebrachte Stäbe oder auf das Außenteil gelegt werden.

Der Ring kann an seiner Außenseite eine umlaufende Stufe aufweisen, in die das Außenteil hineingelegt werden kann. Das Außenteil ist dann gegen ein Herunterrutschen vom Ring gesichert. Umgekehrt kann das Außenteil eine Öffnung mit einer umlaufenden Stufe aufweisen. Wird das Außenteil auf den Ring gelegt, dann kann der Ring in die umlaufende Stufe des Außenteils hineinreichen, um so das Außenteil gegen ein Herunterrutschen zu sichern. Das Außenteil kann ein oder mehrere ringförmige Verstärkungsrippen aufweisen. Es kann dann zumindest eine Verstärkungsrippe geben, deren Innendurchmesser geringfügig größer ist als der Außendurchmesser des Rings. Diese Verstärkungsrippe kann dann das Außenteil vor einem Herunterrutschen vom Ring schützen.

Der Außendurchmesser des Rings kann gleich groß sein wie der Außendurchmesser des Innenteils. Wird das Außenteil auf das Innenteil gelegt, dann kann die genannte Verstärkungsrippe das Außenteil vor einem Herunterrutschen vom Innenteil schützen. Vorteilhaft kann der Ring bei dieser Ausgestaltung besonders schmal sein.

Der Ring kann an seiner Innenseite eine umlaufende Stufe aufweisen, in die das Innenteil hineingelegt werden kann. Das Innenteil ist dann gegen ein Herunterrutschen vom Ring gesichert. Umgekehrt kann das Innenteil an seinem äußeren Rand eine umlaufende Stufe aufweisen. Wird das Innenteil auf den Ring gelegt, dann kann der Ring in die umlaufende Stufe des Innenteils hineinreichen, um so das Innenteil gegen ein Herunterrutschen zu sichern.

Es können aber auch anders geformte formschlüssige Verbindungen zwischen dem Ring und dem Innenteil bzw. dem Außenteil vorgesehen sein, um die Lage des Innenteils bzw. des Außenteils zu sichern. Anders geformte formschlüssige Verbindungen so sein, dass diese nicht nur vor einem Herunterrutschen schützen, sondern außerdem als Ausrichthilfe dienen.

Die zweite Auflage kann mehrteilig sein. Es kann zumindest ein Teil der zweiten Auflage geben, das auf die Öffnung bzw. den Rand der Öffnung der ersten Auflage gelegt oder am Rand der Öffnung eingehängt werden kann, um die Möglichkeiten für das Bereitstellen von Flächen für ein Grillen zu erweitern. Das Teil der zweiten Auflage kann sich dann zumindest überwiegend innerhalb, unmittelbar oberhalb oder unmittelbar unterhalb der Öffnung der ersten Auflage befinden. Die Öffnung wird dann zumindest teilweise durch das Teil der zweiten Auflage verschlossen. Die zweite Auflage kann beispielsweise einen Ring und ein Innenteil aufweisen. Das Innenteil kann dann vorzugsweise wahlweise auf die Öffnung der ersten Auflage aufgelegt werden oder auf den Ring bzw. ggfs. auf Stäbe, die am Ring angebracht sind. Das Innenteil ist dann insbesondere ein Grillrost, damit Luft von oben durch den Grillrost hindurch in den feuerfesten Behälter gelangen kann. Die Öffnung der ersten Auflage ist dann nur teilweise verschlossen worden. Es ist aber auch möglich, dass die erste Auflage einen Grillrost umfasst oder durch einen Grillrost gebildet wird. Dann kann das Innenteil eine geschlossene Oberfläche aufweisen. Dennoch kann Luft von oben in den feuerfesten Behälter strömen. Es ist auch möglich, dass das Innenteil der zweiten Auflage und die erste Auflage geschlossene Oberflächen aufweisen. Das Innenteil der zweiten Auflage kann dann beispielsweise für ein Ersticken von Feuer genutzt werden.

Die Öffnung der ersten Auflage kann eine umlaufende Stufe umfassen, in die das Innenteil hineingelegt werden kann, um das Innenteil gegen ein Verrutschen zu sichern. Alternativ kann das Innenteil eine umlaufende Stufe aufweisen, in die der Rand der Öffnung der ersten Auflage hineinreicht, wenn das Innenteil planmäßig auf die erste Auflage gelegt worden ist.

Die erste Auflage weist bevorzugt eine geschlossene Oberfläche auf. Die erste Auflage umfasst also dann keinen Grillrost oder anders gebildete Öffnungen zusätzlich zu der genannten Öffnung der ersten Auflage. Aufgrund der relativ großen Öffnung der ersten Auflage kann dennoch Luft von oben in den feuerfesten Behälter strömen. Die erste Auflage kann aus genau zwei Teilen bestehen, die aneinanderstoßen können, wenn beide Teile gleichzeitig auf den feuerfesten Behälter aufgelegt sind. Weisen beide Teile eine geschlossene Oberfläche auf, so liegt eine geschlossene Oberfläche im Sinne der vorliegenden Erfindung vor, selbst wenn aufgrund von Fertigungsungenauigkeiten ein minimaler Spalt zwischen den zwei Teilen der ersten Auflage unplanmäßig auftreten sollte. Die zwei Teile der ersten Auflage können gleich sein.

Die zweite Auflage kann einen Bereich mit einer geschlossenen Oberfläche und einen Bereich aufweisen, der durch einen Grillrost gebildet ist, um verschiedene Möglichkeiten für ein Grillen bereitzustellen. Ein Außenteil der zweiten Auflage kann beispielsweise eine geschlossene Oberfläche aufweisen. Ein Innenteil der zweiten Auflage kann ein Grillrost sein.

Beispielsweise kann ein umlaufender Randbereich der zweiten Auflage eine geschlossene Oberfläche aufweisen. Dieser umlaufende Randbereich kann dann beispielsweise flächig auf eine umlaufende Fläche der zweiten Auflage aufgelegt sein oder aufgelegt werden. Der umlaufende Randbereich kann durch ein Außenteil der zweiten Auflage gebildet sein. Durch die flächige Auflage kann vorteilhaft vermieden werden, dass Fett unplanmäßig durch einen Spalt hindurch von der zweiten Auflage auf die erste Auflage heruntertropfen kann.

Es kann eine Schale vorhanden sein, die in den feuerfesten Behälter eingesetzt werden kann. Die Schale kann für eine Aufnahme von Brennmaterial vorgesehen sein. Unterhalb der Schale können dann ein oder mehrere Öffnungen im feuerfesten Behälter vorgesehen sein, um eine Luftzufuhr von unten in den feuerfesten Behälter hinein zu ermöglichen. Es kann dann beispielsweise ein Spalt zwischen dem feuerfesten Behälter und der darin eingesetzten Schale vorhanden sein. Durch den Spalt hindurch kann dann von unten Luft zum Brennmaterial gelangen, wenn Brennmaterial in die Schale gebracht worden ist. Beispielsweise der äußere Rand der Schale kann gelocht sein, um eine Luftzufuhr zum Feuer oder zur Glut zu verbessern.

Ist der feuerfeste Behälter beispielsweise als Kappe einer Kugel oder als Halbkugel geformt, dann kann der feuerfeste Behälter in unterschiedlicher Weise auf ein Gestell gestellt werden. Die Schale kann dennoch immer horizontal ausgerichtet in den feuerfesten Behälter eingesetzt werden. Die Schale kann aus Metall bestehen. Andere feuerfeste Materialien wie Stein oder Beton sind ebenfalls möglich. Die Wandstärke der Wandung der Schale kann wenigstens 1 mm oder wenigstens 2 mm betragen. Die Wandstärke der Wandung der Schale kann nicht mehr als 10 mm oder nicht mehr als 8 mm betragen. Die Wandstärke der Wandung der Schale kann kleiner sein als die Wandstärke der Wandung des feuerfesten Behälters, weil die Stabilitätsanforderungen an die Schale geringer sind.

Die Schale ist wie ein Gefäß geformt. Die Wandung der Schale ist zumindest weit überwiegend geschlossen. Die Oberseite der Schale ist offen. Ist die Schale in den feuerfesten Behälter eingesetzt, so kann Brennmaterial in die Schale gefüllt und angezündet werden. Die Schale unterscheidet sich von dem feuerfesten Behälter durch ihre Höhe. Die Höhe der Schale ist kleiner als die Höhe des feuerfesten Behälters. Die Schale unterscheidet sich von dem feuerfesten Behälter durch ihren Durchmesser. Der maximale Durchmesser der Schale ist kleiner als der maximale Durchmesser des feuerfesten Behälters. Grundsätzlich ist daher auch das Gewicht der Schale kleiner als das Gewicht des feuerfesten Behälters. Insbesondere ist die Schale maximal halb so schwer wie der feuerfeste Behälter.

Die Schale kann in ihrem Grund eine Öffnung (also ein Loch) aufweisen, durch die hindurch Luft in die Schale hineinströmen kann. Mit Grund ist ein unterer Bereich der Schale gemeint und zwar insbesondere der tiefste Bereich der Schale. Es gibt dann eine Abdeckung für die Öffnung. Mit Abdeckung ist ein flächiges Bauteil mit einer zumindest überwiegend geschlossenen Wandung gemeint. Durch den geschlossenen Teil der Wandung kann weder Asche noch Brennmaterial hindurchtreten. Es gibt einen Abstand zwischen der Öffnung und der Abdeckung, sodass die Abdeckung nicht verhindern kann, dass Luft durch die Öffnung hindurch in die Schale hineinströmen kann. Durch die Abdeckung wird vermieden, dass Brennmaterial sowie Asche durch die Öffnung hindurch aus der Schale herausfallen können. An diese Öffnung der Schale kann ein nach oben abstehender Kragen angrenzen, durch den ergänzend vermieden wird, dass Brennmaterial sowie Asche durch diese Öffnung hindurch aus der Schale herausfallen können.

Das Grillgerät kann einen Wok umfassen, der beispielsweise in eine Öffnung der zweiten Auflage eingesetzt werden kann. Es steht dann ein Speisenzubereitungsgefäß zur Verfügung, das für eine Zubereitung einer Speise genutzt werden kann. Beim Wok gibt keinen Unterschied zwischen Boden und Wand, weil ein Wok als Kugelkappe geformt ist. Das Einsetzen in eine Öffnung ist dann besonders einfach und störungssicher. Der Wok kann ganz oder überwiegend aus Metall bestehen. Es kann aber auch ein anders geformtes Speisenzubereitungsgefäß anstelle eines Woks oder als Ergänzung zum Wok vorhanden sein. Das anders geformte Zubereitungsgefäß kann beispielsweise eine Pfanne sein. Das anders geformte Zubereitungsgefäß kann ein Topf sein.

Das Grillgerät kann ein oder mehrere Spieße umfassen, die so lang sind, dass diese auf die Öffnung der zweiten Auflage aufgelegt werden können. Das Grillgerät kann einen Ring umfassen, der auf der Öffnung der zweiten Auflage aufgelegt werden kann. Der Ring kann an seiner Oberseite Vertiefungen aufweisen, in die die Spieße hineingelegt werden können. Die Spieße können so stabil oberhalb der Öffnung gehalten werden.

Das Grillgerät kann ein langgestrecktes Hebewerkzeug umfassen, mit dem ein Grillrost einer Auflage angehoben werden kann. Ein langgestrecktes Hebewerkzeug kann eine Rille und/oder einen Haken umfassen, mit der bzw. mit dem eine Strebe des Grillrosts umgriffen werden kann, um so den Grillrost verliersicher halten zu können. Die Stirnseite des Endes mit der Rille bzw. mit dem Haken kann geradlinig verlaufen. Vorteilhaft kann dann dieses Ende des langgestreckten Hebewerkzeugs auch als Schaber genutzt werden, um etwas von einer Auflage abschaben zu können. Das langgestreckte Hebewerkzeug kann dann in praxistauglicher Weise auch als Reinigungswerkzeug genutzt werden. Das langgestreckte Hebewerkzeug kann wenigstens 20 cm oder wenigstens 30 cm oder wenigstens 40 cm lang sein. Das langgestreckte Hebewerkzeug kann nicht länger als 60 cm oder nicht länger als 50 cm sein. Das langgestreckte Hebewerkzeug kann wenigstens 3 cm oder wenigstens 5 cm breit sein. Das langgestreckte Hebewerkzeug kann nicht breiter als 10 cm oder nicht breiter als 8 cm sein. Das langgestreckte Hebewerkzeug kann wenigstens 0,5 cm oder wenigstens 1 cm dick sein. Das langgestreckte Hebewerkzeug kann nicht dicker als 3 cm oder nicht dicker als 2 cm sein. Das langestreckte Hebewerkzeug kann aus Metall wie Stahl oder Gusseisen bestehen. Das langgestreckte Hebewerkzeug kann zumindest überwiegend wie ein Band geformt sein. Das langestreckte Hebewerkzeug kann aus einem bandförmigen Material durch Umformen hergestellt worden sein. Das langestreckte Hebewerkzeug kann an einem Ende eine Öffnung umfassen. Das Grillgerät kann einen Haken umfassen, um die Öffnung und damit das langgestreckte Hebewerkzeug in den Haken einhängen zu können.

Das Grillgerät kann also ein langgestrecktes Hebewerkzeug für einen Grillrost einer Auflage umfassen, welches ein Ende mit einer Rille und/oder einem Haken für ein Umgreifen einer Rippe des Grillrosts umfassen kann.

Eine Stirnseite des Endes mit der Rille und/oder dem Haken kann geradlinig verlaufen oder durch Zinken gebildet werden.

Der feuerfeste Behälter des Grillgeräts kann halbkugelförmig sein. Die erste Auflage kann einen kreisrunden Außendurchmesser aufweisen. Die Öffnung der ersten Auflage kann einen kreisrunden Außendurchmesser aufweisen. Die zweite Auflage kann einen kreisrunden Außendurchmesser aufweisen. Die zweite Auflage kann einen kreisrunden Innendurchmesser aufweisen.

Der feuerfeste Behälter kann halbkugelförmig sein, um den feuerfesten Behälter unterschiedlich ausgerichtet aufstellen zu können, so zum Beispiel auf ein Dreibein. Die erste Auflage kann einen kreisrunden Außendurchmesser aufweisen. Die Öffnung der ersten Auflage kann einen kreisrunden Außendurchmesser aufweisen. Die zweite Auflage kann einen kreisrunden Außendurchmesser aufweisen. Die zweite Auflage kann einen kreisrunden Innendurchmesser aufweisen, um einen Wok in die zweite Auflage einsetzen zu können.

Die Erfindung betrifft auch eine Auflage für ein Grillgerät. Die Auflage kann einen Ring umfassen. An dem Ring kann eine Abstandseinrichtung befestigt sein. An dem Ring können parallel verlaufende Stäbe befestigt sein. Ein jeder Stab kann einen seitlich abstehenden Bolzen oder einen anders geformten Fuß aufweisen. Vorzugsweise kann der Fuß in unterschiedlichen Höhen an dem Stab lösbar befestigt werden. Die Auflage kann ein auf den Ring auflegbares flächiges Außenteil umfassen, das im aufgelegten Zustand nach außen von dem Ring absteht. Das flächige Außenteil kann eine geschlossene Oberfläche aufweisen. Die Auflage kann ein auf den Ring oder auf Stäbe, die am Ring befestigt sind, auflegbares flächiges Innenteil umfassen. Das Innenteil steht im aufgelegten Zustand nach innen von dem Ring ab. Das Innenteil kann ein Grillrost sein.

Das Außenteil kann flächig auf dem Ring aufliegen. Das Innenteil kann auf den Stäben aufliegen, wenn Stäbe am Ring befestigt sind.

Nachfolgend wird die Erfindung anhand von Figuren näher erläutert. Es zeigen
- Figur 1:: Schnitt durch einen feuerfesten Behälter mit darin eingesetzter Schale;
- Figur 2:: Schnitt durch den feuerfesten Behälter in einer gedrehten Ansicht;
- Figur 3:: Schnitt durch den feuerfesten Behälter mit Brennmaterial;
- Figur 4:: Schnitt durch den feuerfesten Behälter mit aufgelegter erster Auflage;
- Figur 5:: Aufsicht auf den feuerfesten Behälter;
- Figur 6:: Aufsicht auf den feuerfesten Behälter mit aufgelegter erster Auflage;
- Figur 7:: Grillgerät mit erster und zweiter Auflage;
- Figur 8:: Grillgerät mit Wok;
- Figur 9:: Grillrost mit Hebewerkzeug;
- Figur 10:: Aufsicht auf Oberseite von Grillrost mit Hebewerkzeug und Abstandseinrichtung;
- Figur 11:: Aufsicht auf Unterseite von Grillrost mit Hebewerkzeug und Abstandseinrichtung;
- Figur 12:: Grillgerät mit erster und zweiter Auflage;
- Figur 13:: Ausrichthilfe für Grillrost;
- Figur 14:: Bolzen mit Stab der Abstandseinrichtung;
- Figur 15:: Befestigung von Stab an zweiter Auflage;
- Figur 16:: Hebewerkzeug;
- Figur 17:: Seitenansicht des Hebewerkzeugs;
- Figur 18:: Hebewerkzeug;
- Figur 19:: Grillrost mit Hebewerkzeug;
- Figur 20:: Detailansicht von Ring mit aufliegendem Grillrost;
- Figur 21:: Detailansicht von Ring, Rost und Außenteil;
- Figur 22:: Detailansicht von Ring, Außenteil und Rost;
- Figur 23:: Unterseite von Außenteil;
- Figur 24:: Ring mit integrierter Dreipunktauflage;
- Figur 25:: anderer Ring mit Speiß;
- Figur 26:: Grillgerät mit Grillrost.

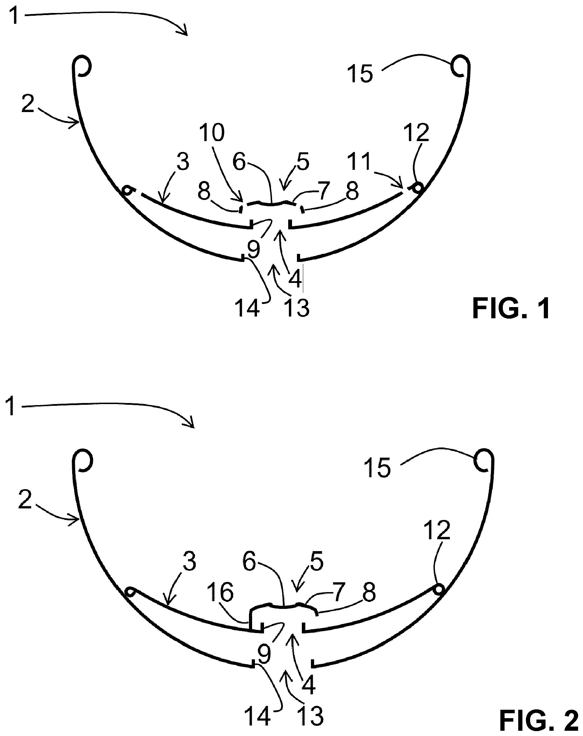

Die Figur 1 zeigt im Schnitt eine Brennkammer 1 eines Grillgeräts. Die Brennkammer 1 umfasst einen feuerfesten Behälter 2 und eine Schale 3. Die Schale 3 ist in den feuerfesten Behälter 2 eingesetzt. Die Höhe der Schale 3 ist wie in der Figur 1 gezeigt um ein Mehrfaches kleiner als die Höhe des feuerfesten Behälters 2. Im Fall der Figur 1 ist der feuerfeste Behälter 2 ungefähr mehr als dreimal so hoch wie die Höhe der Schale 3. Der feuerfeste Behälter 2 ist halbkugelförmig. Die Schale 3 verläuft bogenförmig und kann wie eine Kappe einer Kugel geformt sein.

Die Schale 3 weist in ihrem Grund eine Öffnung 4 auf, durch die Luft in den Innenraum der Schale 3 strömen kann. Es gibt eine Abdeckung 5 oberhalb der Öffnung 4. Zwischen der Abdeckung 5 und der Öffnung 4 sowie dem Grund der Schale 3 gibt es einen Abstand. Die Abdeckung 5 verhindert damit lediglich, dass von oben Brennmaterial und Asche durch das Loch 4 hindurch fallen kann. Die Abdeckung 5 ist also kein Verschluss für die Öffnung 4. Ein Verschluss würde einen Luftdurchtritt durch die Öffnung 4 verhindern, was nicht gewollt ist. Die Abdeckung 5 ist nah bei der Öffnung 4 angeordnet, sodass oberhalb der Abdeckung Brennmaterial sein kann, ohne aus der Brennkammer 1 seitlich herausfallen zu können.

Die Abdeckung 5 ragt vorzugsweise wie gezeigt nicht aus der Schale 3 heraus. Die Abdeckung 5 befindet sich also vorzugsweise im Innenraum der Schale 3.

In der Mitte der Abdeckung 5 gibt es eine Mulde 6. In die Mulde 6 kann ein Grillanzünder hineingelegt werden. Von der Mulde 6 ausgehend verläuft die Abdeckung nach unten geneigt und zwar in Richtung Grund der Schale 3. Zuerst gibt es eine leicht abfallende Neigung 7 und im Anschluss daran eine stark abfallende Neigung 8.

Die im Grund der Schale vorhandene Öffnung 4 wird durch einen Kragen 9 begrenzt, der nach oben, also in Richtung Innenraum der Schale 3, absteht. Die stark abfallende Neigung 8 der Abdeckung 5 und der Kragen 9 wirken als Barriere für Brennmaterial und Asche, die sich seitlich davon im Innenraum der Schale 3 befinden können. Die Barrierewirkung trägt dazu bei, dass kein Brennmaterial und Asche durch die Öffnung 4 hindurch aus der Schale 3 herausfallen.

Sowohl der Randbereich der Abdeckung 5 als auch der Randbereich der Schale 3 weisen eine Vielzahl von Löchern 10 bzw. 11 auf. Die Randbereiche sind also gelocht. Die Löcher 11 im Randbereich der Schale 3 sind aufgrund der Neigung der Schale im Randbereich so geneigt, dass Luft, die von der Unterseite der Schale 3 durch die Löcher 11 strömt, in Richtung Innenraum der Wanne 2 gelenkt wird. Der äußere Rand 12 der Schale 3 ist rohrförmig nach außen gebogen. Dadurch liegt der rohrförmige Rand 12 dicht an der angrenzenden Wand des feuerfesten Behälters 2 an. Auch wird dadurch erreicht, dass ein Abstand zwischen dem feuerfesten Behälter 2 und Löcher bzw. Öffnungen 11 vorhanden ist, damit Luft in ausreichender Menge zu den Löchern strömen kann.

Der feuerfeste Behälter 2 weist an seiner Unterseite eine Öffnung 13 mit einem nach oben abstehenden Kragen 14 auf. Der Kragen 14 umläuft die Öffnung 13. Der obere Rand 15 des feuerfesten Behälters 2 ist rohrförmig nach innen gebogen. Dadurch steht der rohrförmige Rand 15 vorteilhaft nicht störend nach außen ab.

Der Wandbereich der Schale 3, der sich zwischen dem Randbereich mit den Öffnungen 11 und der Öffnung 4 im Grund der Schale 3 befindet, ist vollkommen geschlossen und damit undurchlässig für Asche und Brennmaterial. Der Wandbereich des feuerfesten Behälters 2, der sich zwischen der Öffnung 13 im Grund des feuerfesten Behälters 2 und dem gebogenen Rand 15 befindet, ist vollkommen geschlossen und damit undurchlässig für Asche und Brennmaterial.

Die Figur 2 zeigt einen Schnitt durch die Brennkammer 1 aus Figur 1 und zwar in einer um eine Längsachse gedrehten Ansicht. Aufgrund der Drehung um eine Längsachse sind keine Löcher 10 und 11 in den Randbereichen von Schale und Abdeckung zu sehen. Dafür ist in der Schnittdarstellung gemäß Figur 2 nun ein Steg 16 zu sehen, der die Abdeckung 5 mit dem Grund der Schale 3 verbindet. Es kann beispielsweise zwei, drei, vier oder mehr Stege 16 geben, die die Abdeckung 5 mit dem Grund der Schale 3 verbinden. Zwischen zwei Stegen 16 gibt es dann eine bandförmige Öffnung 17, durch die Luft hindurchströmen kann. Es kann zwar auch nur einen Steg 16 geben. Dies ist aber aus Stabilitätsgründen schwierig. Zu bevorzugen sind genau drei Stege 16, die untereinander gleiche Abstände aufweisen. Eine jede bandförmige Öffnung 17 ist dann gleich lang. Durch das Vorsehen von genau drei Stegen 16, die untereinander gleiche Abstände aufweisen, kann die Abdeckung 5 derart stabil mit der Schale 3 verbunden werden, dass die Abdeckung 5 auch unproblematisch als Griff verwendet werden kann. Finger einer Hand können dann in die bandförmigen Öffnungen hineingreifen. Sind nur drei Stege 16 vorhanden, so gibt es vorteilhaft nur wenige Stege 16, die einen gewünschten Luftdurchtritt behindern.

Aus den Figuren 1 und 2 folgt, dass die in den Figuren 1 und 2 gezeigte Brennkammer 1 im wesentlichen rotationssymmetrisch ist. Eine im Wesentlichen rotationssymmetrische Form ist aber nicht zwingend erforderlich.

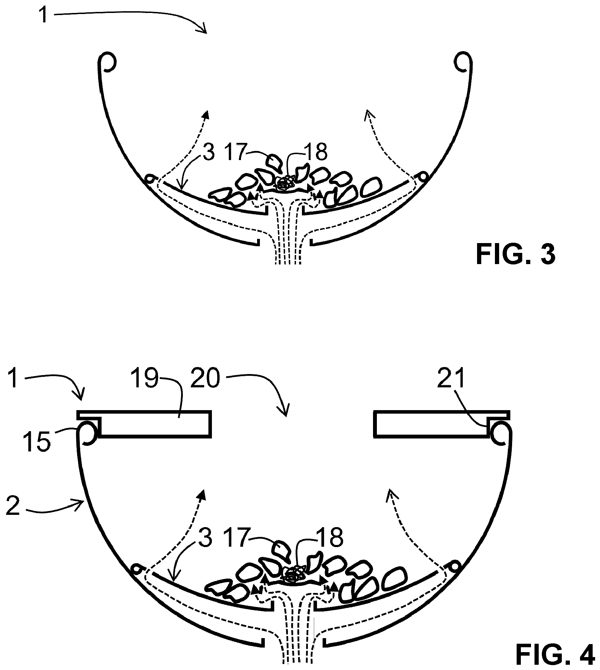

In der Figur 3 wird die Schnittdarstellung der Brennkammer 1 aus Figur 1 gezeigt. Außerdem wird Brennmaterial 17 dargestellt, welches sich auf der Schale 3 befindet. Ein Grillanzünder, so zum Beispiel eine mit Wachs getränkte Holzwolle 18, ist auf der Mulde 6 der Abdeckung 5 abgelegt. Wird der Grillanzünder 18 angezündet, so entsteht aufgrund der Erwärmung eine Luftströmung nach oben, wodurch Luft von unten angesaugt wird. Durch gestrichelte Pfeile wird in der Figur 3 die Luftströmung und die damit verbundene Kaminwirkung verdeutlicht, die für ein deutlich verbessertes Anzündverhalten des Brennmaterials 17 sorgt. Es gelingt so, Brennmaterial 17 im mittleren Bereich schnell und umfassend anzuzünden.

Die Figur 4 zeigt die Brennkammer aus Figur 3, jedoch mit einer ersten Auflage 19, die auf den Rand 15 der Wanne 2 aufgelegt ist. Die ersten Auflage 19 ist eine Scheibe, die eine große Öffnung 20 in ihrer Mitte aufweist. Dadurch wird der gewünschte Kamineffekt weiter gesteigert. Das Anzündverhalten wird dadurch weiter verbessert. An der Unterseite bei der Scheibe 19 kann eine umlaufende Ausbuchtung 21 vorhanden sein. Die Ausbuchtung kann wie eine Stufe geformt sein. Durch diese Ausbuchtung 21 kann die Scheibe 19 gegen ein seitliches Verrutschen gesichert werden. Die Scheibe 19 kann aus einem hitzebeständigen Metall wie zum Beispiel Gusseisen oder aus Stahl bestehen. Die erste Auflage 19 kann eine aus Emaille bestehende Schicht auf ihrer Oberfläche aufweisen. Anstelle einer aus Emaille bestehenden Schicht kann eine keramische Antihaft-Beschichtung vorgesehen sein, wie diese bei Bratpfannen zum Einsatz kommt, um unerwünschte Anhaftungen zu vermeiden. Anstelle einer Scheibe 19 können zwei Scheiben vorhanden sein, die so zusammen auf den Rand 15 der Wanne 2 aufgelegt werden können, dass dadurch eine in die Brennkammer hineinführende Öffnung verkleinert wird.

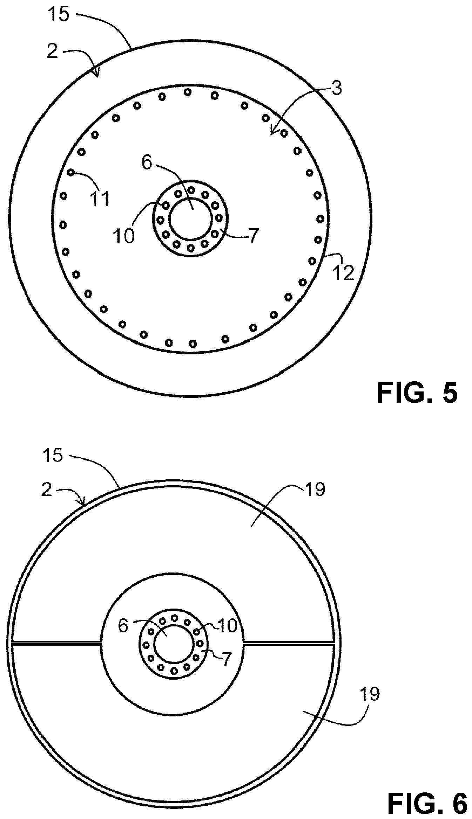

Die Figur 5 skizziert eine Aufsicht auf die Brennkammer, die verdeutlicht, dass die Brennkammer im wesentlichen rotationssysmmetrisch sein kann.

Die Figur 6 zeigt ein Beispiel für zwei Scheiben, die die erste Auflage 19 bilden. Die Scheiben sind so zusammen auf den Rand 15 des feuerfesten Behälters 2 aufgelegt, dass dadurch die in die Brennkammer 1 hineinführende Öffnung verkleinert wird.

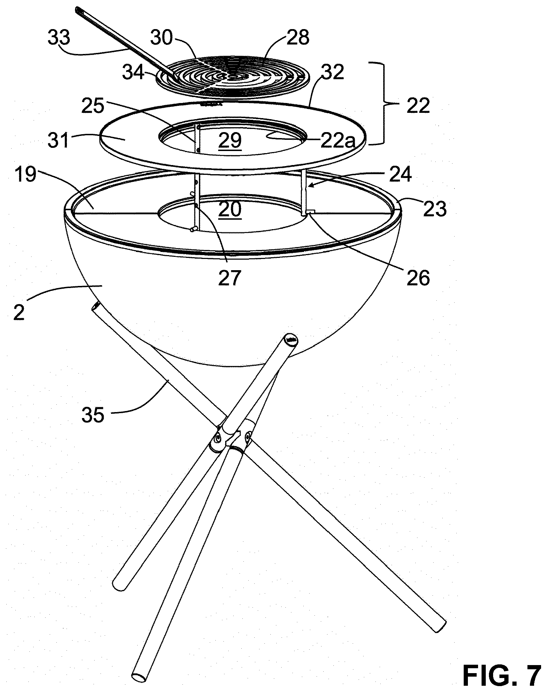

Die Figur 7 zeigt ein Grillgerät mit einem feuerfesten Behälter 2 mit einer ersten Auflage 19 und mit einer zweiten Auflage 22. Die erste Auflage 19 besteht wie bereits in der Figur 6 gezeigt aus zwei scheibenförmigen Teilen, die eine Öffnung 20 ringförmig umgeben. Die erste Auflage umfasst einen äußeren, nach oben abstehenden Rand 23. Der nach oben abstehende Rand vermeidet, dass Fett nach außen abfließen und von dem Grillgerät heruntertropfen kann. Die beiden Teile der ersten Auflage 11 sind gleich geformt und stellen eine geschlossene Oberfläche bereit. Auf die erste Auflage 19 kann Grillgut für eine Zubereitung aufgelegt werden.

Es gibt eine Abstandseinrichtung 24, mit der ein Abstand zwischen der ersten Auflage 19 und der zweiten Auflage 22 eingestellt werden kann. Die Abstandseinrichtung 24 umfasst drei Stäbe 25. Von jedem Stab 25 steht ein Bolzen 26 senkrecht ab. Die drei Stäbe 25 und die drei zugehörigen Bolzen 26 sind so angeordnet, dass die Bolzen 26 auf den Rand der Öffnung 20 der ersten Auflage 19 aufgelegt sind bzw. aufgelegt werden können. Die Stäbe 25 reichen in die Öffnung 20 der ersten Auflage 19 hinein. Dadurch ist die Abstandseinrichtung 24 gegen ein seitliches Verrutschen gesichert. Im Fall der Figur 7 sind die Bolzen 26 am unteren Ende der Stäbe 25 befestigt. Der Abstand zwischen der ersten Auflage 19 und der zweiten Auflage 22 ist daher maximal.

Die Bolzen 26 sind höhenverstellbar an den Stäben 25 befestigt. Um dies zu erreichen, weisen die Stäbe mehrere Bohrungen 27 mit Innengewinde auf. Ein Ende eines jeden Bolzens 26 weist ein Außengewinde auf, das in eine der Bohrungen 27 hineingeschraubt werden kann. Die drei Stäbe 25 mit den Bolzen 26 sind gleich.

Anstelle einer Schraubverbindung kann eine andere Verbindung zwischen Bolzen 26 und Stäben 25 vorgesehen sein, die so ist, dass die Position der Bolzen 26 besonders schnell verändert werden kann, um den Abstand zwischen erster Auflage 19 und zweiter Auflage 22 besonders schnell verändern zu können. Möglich sind beispielsweise Bajonettverbindungen zwischen Bolzen 26 und Stäben 25. Möglich ist, dass ein Bolzen mit einer anderen Schnellverbindung an dem Stab befestigt werden kann, so zum Beispiel mithilfe einer Klammer.

Die zweite Auflage 22 besteht aus einer Mehrzahl von Teilen, wobei ein Teil ein Grillrost 28 ist, der so auf den Rand der Öffnung 29 der zweiten Auflage 22 mithilfe einer Ausrichthilfe gelegt werden kann, dass Streben 31 des Grillrostes 28 bei den Stäben 25 der Abstandseinrichtung 24 enden oder zumindest auf den Stäben aufliegen. Der Grillrost 28 ist ein flächiges Innenteil der zweiten Auflage 22, das im aufgelegten Zustand nach innen von einem Ring 22a der zweiten Auflage 22 absteht. Die Öffnung 29 wird durch den Ring 22a der zweiten Auflage 22 gebildet. Die Stäbe 25 der Abstandseinrichtung 24 sind an der Innenseite des Rings 22a befestigt. Wird der Grillrost 28 auf den Ring 22a der zweiten Auflage 22 aufgelegt, so liegt der Grillrost 28 auf den oberen Enden der Stäbe 25 auf. Die Stäbe 25 bilden somit eine 3-Punkt-Auflage für den Grillrost 28. Es gibt daher teilkreisförmig verlaufende Spalte zwischen der Unterseite des Grillrostes 28 und der Oberseite des Rings 22a bzw. ggfs. der Oberseite einer umlaufenden Stufe des Rings 22a. Der Grillrost liegt damit zuverlässig spielfrei auf dem Ring 22a auf.

Die Öffnung 29 der zweiten Auflage 22 weist den gleichen Durchmesser wie die Öffnung 20 der ersten Auflage 19 auf. Der äußere Rand der beiden Öffnungen 20, 29 kann gleich sein. Der Grillrost kann dann sowohl auf den Rand der Öffnung 20 als auch auf den Rand 29 in gleicher Weise aufgelegt werden. Ist der Grillrost 28 auf den Rand der Öffnung 20 der ersten Auflage 19 oder auf den Rand der Öffnung 29 der zweiten Auflage 22 aufgelegt, dann befindet sich der Grillrost 28 oberhalb der jeweiligen Öffnung 20 bzw. 29.

Beide Ränder der beiden Öffnungen 20, 29 können beispielsweise in gleicher Weise stufenförmig so sein, dass der Grillrost 28 sowohl auf den stufenförmigen Rand der Öffnung 20 der ersten Auflage 19 als auch auf den stufenförmigen Rand der Öffnung 29 der zweiten Auflage 22 aufgelegt werden kann. Ist der Grillrost 28 auf den stufenförmigen Rand der Öffnung 20 der ersten Auflage 19 aufgelegt, dann kann sich der Grillrost 28 zumindest zum Teil auf der gleichen Höhe wie die Öffnung 20 der ersten Auflage 19 befinden.

Auf den Ring 22a ist ein Außenteil 31 der zweiten Auflage 22 aufgelegt. Im aufgelegten Zustand steht das Außenteil 31 nach außen von dem Ring 22a ab. Das Außenteil 31 der zweiten Auflage 22 ist eine Scheibe mit einer zentralen Öffnung mit einer ansonsten geschlossenen Oberfläche. Das Außenteil 31 der zweiten Auflage 22 bildet daher einen flächigen umlaufenden Randbereich der zweiten Auflage 22. Der umlaufende, flächige Randbereich der zweiten Auflage 22 ist wie eine kreisförmig verlaufende Bahn geformt.

Das Außenteil 31 ist flächig auf den Ring 39 der zweiten Auflage 22 aufgelegt. Im Idealfall gibt es daher keinen Spalt zwischen dem Außenteil 31 und dem Ring 22a, durch den Fett hindurchfließen könnte. Das Außenteil 31 kann einen nach oben abstehenden, an der Außenseite umlaufenden Rand 32 aufweisen, durch den vermieden werden kann, das Fett nach außen von dem Außenteil 31 heruntertropfen kann.

Der Grillrost 28, also das Innenteil der zweiten Auflage 22, und das Außenteil 31 können unabhängig voneinander auf den Ring 22a aufgelegt werden. Sowohl auf den Grillrost 28 als auch auf das Außenteil 31 kann Grillgut für ein Erhitzen und damit für eine Zubereitung aufgelegt werden.

In der Figur 7 wird ein langgestrecktes Hebewerkzeug 33 gezeigt. Ein Ende des Hebewerkzeugs 33 ist zwischen zwei ringförmige Rippen 34 des Grillrosts 28 so hineingeschoben worden, dass die weiter innen liegende Rippe 34 in eine Rille des Hebewerkzeugs 33 hineinreicht. In dieser Stellung schließt das Hebewerkzeug 33 mit der Oberfläche des Grillrosts 28 einen spitzen Winkel ein, der kleiner als 45° und/oder größer als 20° sein kann. Das dann nach oben abstehende Ende des Hebewerkzeugs 33 kann ergriffen werden, um den Grillrost 28 in die Öffnung 29 der zweiten Auflage 22 einzusetzen oder aber um den Grillrost 28 von der Öffnung 29 abzuheben und zu entfernen. Der Grillrost 28 kann nach einem Entfernen abgelegt werden. Das Hebewerkzeug 33 kann dann herausgezogen und so von dem Grillrost 28 gelöst werden.

Der feuerfeste Behälter 2 ist auf ein Dreibein 35 gestellt, damit die für ein Grillen vorgesehen Auflagen 19 und 22 sich in einer bequem erreichbaren Höhe befinden. Anstelle des Dreibeins 35 kann auch ein anderer Ständer für den feuerfesten Behälter 2 vorgesehen sein. Der andere Ständer kann aus ein oder mehreren Drähten hergestellt worden sein.

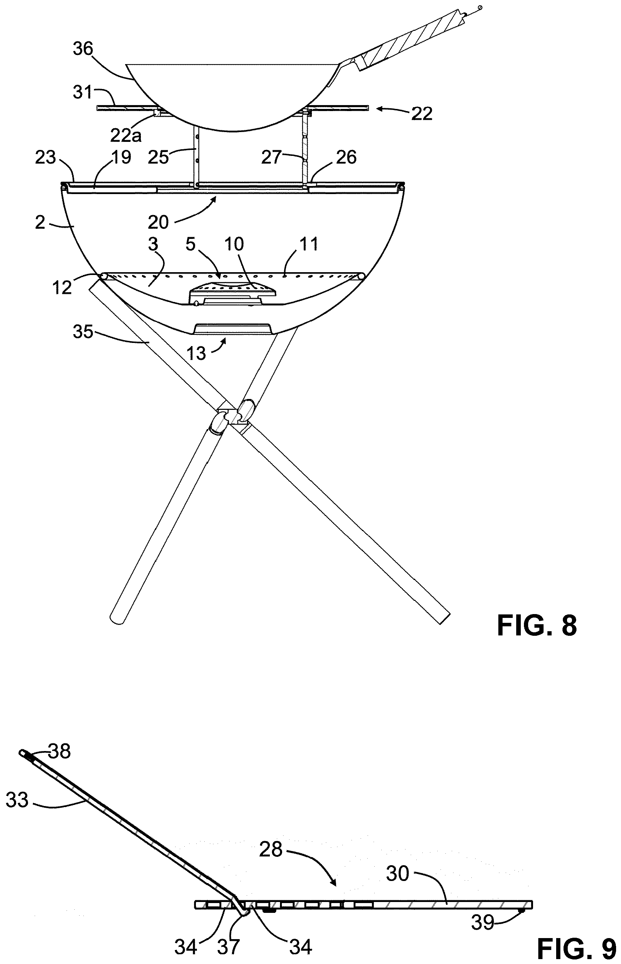

Die Figur 8 zeigt einen Schnitt durch das Grillgerät aus der Figur 7. Die Figur 8 verdeutlicht, dass ein Wok 36 in die Öffnung 29 der zweiten Auflage 22 eingesetzt werden kann. Der Wok 36 kann dann als Zubereitungsgefäß für ein Nahrungsmittel verwendet werden.

Die Figur 9 zeigt einen Schnitt durch einen Grillrost 28 und das Hebewerkzeug 33. Das Hebewerkzeug 33 weist ein hakenförmiges Ende 37 auf, durch das eine Rille bereitgestellt wird, in die eine ringförmige Rippe 34 des Grillrosts 28 hineinreicht. Das andere Ende des Hebewerkzeugs 33 kann eine Öffnung 38 aufweisen, die für ein Aufhängen des Hebewerkzeugs 33 an einen Haken genutzt werden kann. Der Grillrost 28 kann an seiner Unterseite 3 drei oder mehr Vorsprünge 39 aufweisen, die jeweils einen geringen, gleichen Abstand zum äußeren Rand des Grillrostes 28 aufweisen.

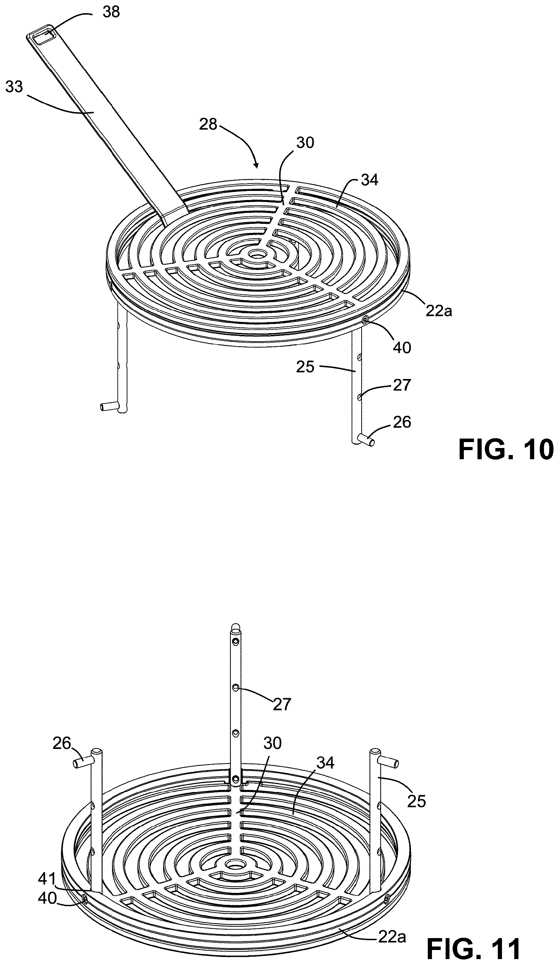

Die Figur 10 verdeutlicht das Aufsetzen des Grillrosts 28 unmittelbar auf den Ring 22a der zweiten Auflage 22. Die Vorsprünge 39 reichen in den Ring 22a hinein und befinden sich dann nahe beim inneren Rand des Rings 22a der zweiten Auflage 22 und verhindern, dass der Grillrost 28 von dem Ring 22a herunterrutschen kann. Der Außendurchmesser des Grillrosts 28 und der Außendurchmesser des Rings 22a können gleich sein. Der Innendurchmesser des Grillrosts 28 und der Innendurchmesser des Rings 22a können gleich sein.

Das hakenförmige Ende 37 des Hebewerkzeugs 33 verläuft geradlinig und parallel zum geradlinigen anderen Ende, bei der sich die Öffnung 38 befindet. Damit kann das geradlinige verlaufende Ende, das durch den Haken 37 gebildet wird, als Schaber verwendet werden.

Die Stäbe 25 sind mithilfe von Schrauben 40 an der Innenseite des Rings 22a festgeschraubt. Die Figur 10 verdeutlicht auch, dass die Streben 30 sich genau oberhalb der Stäbe 25 befinden, wenn sich der Grillrost 28 unmittelbar auf dem Ring 22a befindet. Dies kann durch eine Ausrichthilfe gewährleistet werden.

Die Figur 11 zeigt den auf den Ring 22a aufgesetzten Grillrost 28 von unten. Um die Stäbe 25 stabil befestigen zu können, weist die Innenseite des Rings 28 teilkreisförmige Ausnehmungen 41 auf, die an die Form der Stäbe 25 angepasst sind. Ein jeder Stab 25 liegt dicht an der jeweils zugehörigen Ausnehmung an und wird so besonders stabil gehalten.

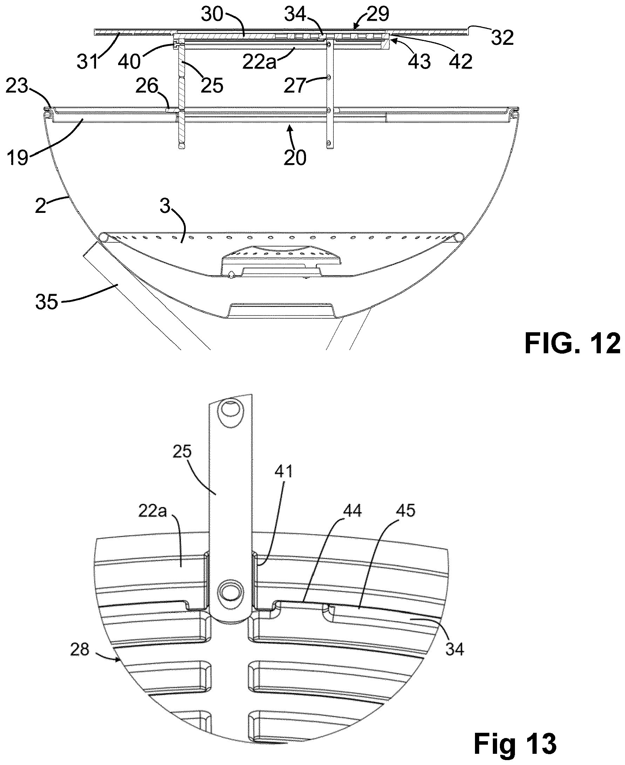

Die Figur 12 zeigt einen Schnitt durch das Grillgerät mit Bolzen 26, die jeweils in Bohrungen 27 eingeschraubt worden sind, die sich nicht am unteren Ende der Stäbe 25 befinden. Dadurch ist der Abstand zwischen der ersten Auflage 19 und der zweiten Auflage 22 mit dem Ring 22a nicht maximal. Die Figur 12 zeigt, dass der Ring 22a auf den Stäben 25 aufliegt und dadurch schmale Spalte 43 zwischen dem Ring 22a und dem Grillrost 28 mit den Streben bzw. Rippen 30, 34 vorhanden sind. Das Außenteil 31 weist an seiner Unterseite ein oder mehrere vorstehende, ringförmige Verstärkungsrippen 42 auf, um den Materialaufwand für das Außenteil 31 gering zu halten. Die innerste Verstärkungsrippe 42 weist einen geringfügig größeren Durchmesser auf als der Außendurchmesser des Grillrosts 28 sowie als der gleich große Außendurchmesser des Rings 22a. Die innerste Verstärkungsrippe 42 schützt damit das Außenteil 31 vor einem Verrutschen und zwar unabhängig davon, ob dieses auf den Grillrost 28 aufgelegt worden ist oder unmittelbar auf den Ring 22a. Es kann also auch zuerst das Außenteil 31 auf den Ring 22a aufgelegt werden und danach der Grillrost 28 auf das Außenteil. Das Außenteil liegt in beiden Fällen flächig auf, also entweder flächig auf der Oberseite des Rings 22a oder flächig auf der Oberseite des Grillrosts 26. Durch die beschriebene Konstruktion kann der Materialaufwand für den Ring 22a vorteilhaft besonders geringgehalten werden.

Die Schrauben 40, mit denen die Stäbe 25 an der Innenseite des Rings 22a befestigt sind, sind versenkt und stehen folglich nicht in störender Weise gegenüber dem Außenumfang des Rings 22a hervor.

Der in der Figur 13 gezeigte Ausschnitt zeigt eine Ausnehmung 44 des Rings 22a, in die ein Vorsprung 45 des Grillrosts 28 hineinreicht, um so eine Ausrichthilfe bereitzustellen.

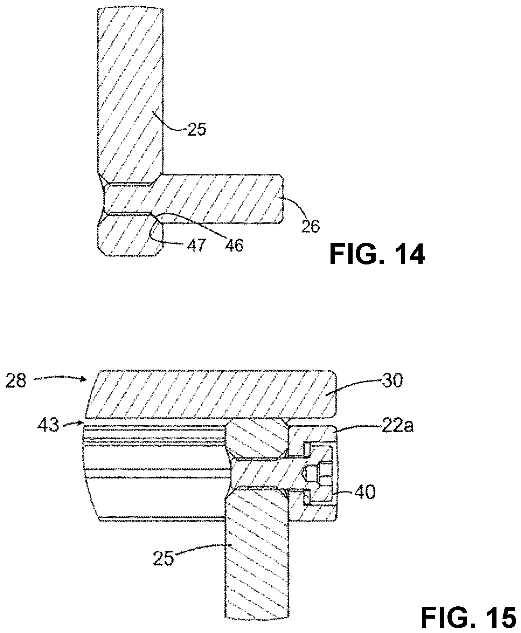

Der Ausschnitt der Figur 14 zeigt aneinander angepasste konische Verjüngungen 46, 47 von Bolzen 26 und Gewindeeinlass des Stabes 25, durch die der Bolzen 26 am Stab 25 gehalten wird. Durch die konischen Verjüngungen kann der Materialaufwand für ein hinreichend stabiles Halten des Bolzens 26 durch den Stab 25 geringgehalten werden.

Die Figur 15 verdeutlicht durch einen Ausschnitt das Vorhandensein eines Spalts 43 zwischen Ring 22a und unmittelbar aufgelegten Grillrost 28 sowie die Versenkung einer Schraube 40 zur Befestigung eines Stabs 25 an dem Ring 22a.

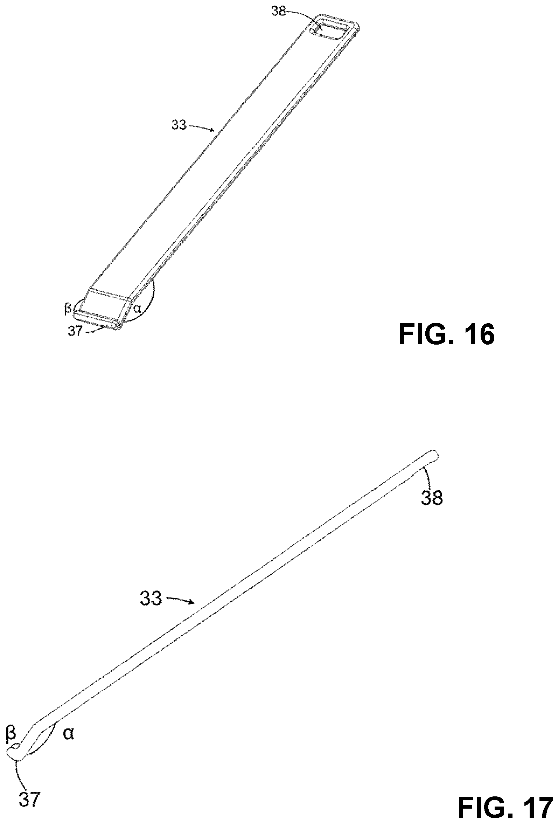

Die Figuren 16 und 17 zeigen das Hebewerkzeug 33 mit der Öffnung 38 an einem Ende und dem gegenüberliegenden hakenförmigen Ende 37. Das Hebewerkzeug 33 umfasst einen bandförmigen Abschnitt 48, der geradlinig verläuft. Ein erster Abschnitt des hakenförmigen Endes 37 schließt einen Winkel a mit dem bandförmigen Abschnitt 48 ein. Der Winkel α kann kleiner als 175° oder kleiner als 170° sein. Der Winkel α kann größer als 140° oder größer als 150° sein. Ein zweiter Abschnitt des hakenförmigen Endes 37 schließt mit dem ersten Abschnitt einen Winkel β ein. Der Winkel β kann kleiner als 100° oder kleiner als 95° sein. Der Winkel β kann größer als 80° oder größer als 85° sein. Vom bandförmigen Abschnitt 48 aus gesehen knickt das hakenförmige Endes 37 zunächst nach unten und dann nach oben ab oder anderes ausgedrückt zunächst zur einen Seite und dann zur anderen Seite. Die Breite des Hebewerkzeugs 33 kann wie in der Figur 16 gezeigt konstant sein, um eine Fertigung zu erleichtern. Die Dicke des bandförmigen Abschnitts 48 kann aus Gründen der einfachen Fertigung konstant sein. Lediglich im Bereich der Öffnung 38 kann die Dicke geringer sein, um ein Einhängen in einen Haken zu erleichtern. Die Dicke des ersten Abschnitts des hakenförmigen Endes 37 kann aus Gründen der einfachen Fertigung konstant sein und gleich sein wie die Dicke des bandförmigen Abschnitts 48. Die Dicke des zweiten Abschnitts des hakenförmigen Endes 37 kann aus Gründen der einfachen Fertigung konstant sein und gleich sein wie die Dicke des bandförmigen Abschnitts 48. Die Dicke des zweiten Abschnitts kann aber auch erst nur anfänglich der Dicke des bandförmigen Abschnitts 48 und/oder der Dicke des ersten Abschnitts des hakenförmigen Endes 37 entsprechen und sich daran anschließend zum freien Ende hin verjüngen.

Ein so geformtes hakenförmiges Ende 37 ist geeignet, um einerseits den Grillrost 28 von der Öffnung 29 abheben und entfernen zu können. Aufgrund des geradlinigen Verlaufs der Außenseite des hakenförmigen Endes 37 kann dieses als Schaber für ein Reinigen einer Oberfläche verwendet werden, auf der gegrillt worden ist.

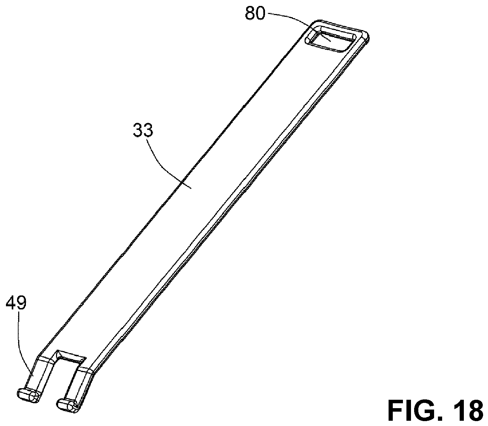

Die Figur 18 zeigt ein Hebewerkzeug 33, das ein Ende mit zwei Zinken 49 aufweisen kann. Die Zinken 49 können wie das vorgenannte Ende 37 hakenförmig sein. Die beiden Zinken 49 können parallel verlaufen.

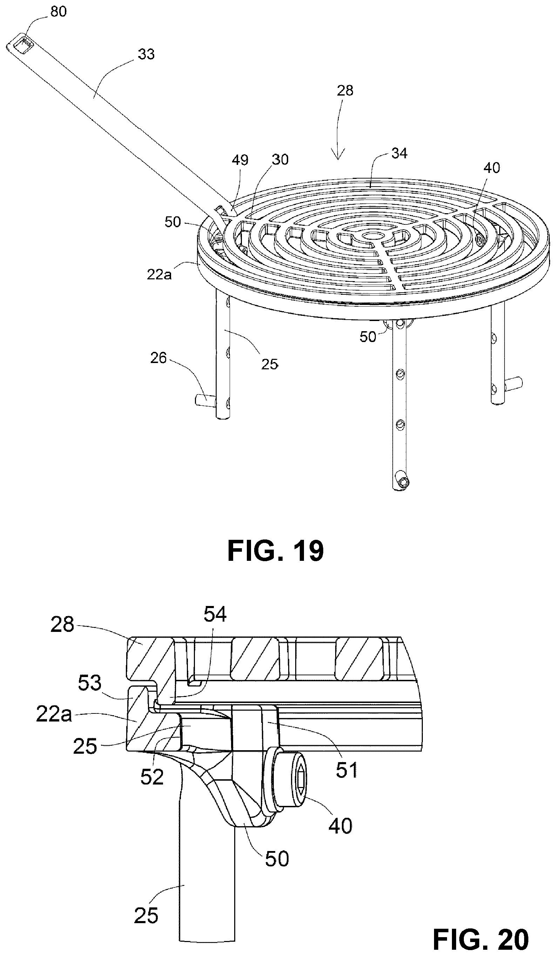

Die Figur 19 zeigt einen auf einem Ring 22a aufliegenden Grillrost 28 mit dem Hebewerkzeug 33 aus Figur 18. Die beiden Zinken 49 können einen größeren Abstand aufweisen als die Breite einer von innen nach außen verlaufende Strebe 30 des Grillrosts 28. Dann können die beiden Zinken 49 so zwischen zwei Rippen 34 des Grillrosts 28 eingeführt werden, dass sich danach eine Strebe 30, wie in der Figur 19 gezeigt, zwischen den beiden Zinken 49 befindet. Ein besonders zuverlässiges Halten des Grillrosts 28 durch das Hebewerkzeug 33 ist dann möglich.

An dem Ring 22a kann ein Befestigungsbauteil 50 vorgesehen sein, um einen Stab 25 besonders stabil mit dem Ring 22a verbinden zu können. Der Stab 25 kann an dem Befestigungsbauteil 50 durch eine Schraube 40 befestigt sein. Die Schraube 40 kann beispielsweise von innen nach außen verlaufen und so von dem Befestigungsbauteil 50 in den Stab 25 hineinführen. Stab 25, Befestigungsbauteil 50 und Schraube 40 können dann gegenüber dem äußeren Rand des Rings 22a, wie in der Figur 19 gezeigt, nach innen versetzt und damit besonders geschützt und verdeckt angeordnet sein.

Die Figur 20 zeigt eine Detailansicht des Ring 22a mit dem Befestigungsbauteil 50 und dem aufliegendem Innenteil 28. Das Innenteil ist bevorzugt wie gezeigt ein Grillrost. Wie gezeigt kann das Befestigungsbauteil 50 nach unten und/oder nach innen von dem Ring 22a abstehen. Das Befestigungsteil 50 kann eine Erhöhung 51 so umfassen, die so nach oben absteht, dass diese einen Auflagepunkt bildet, auf dem im Fall der Figur 20 das Innenteil 28 aufliegt. Das Befestigungsteil umfasst also eine Fläche, die als Punktauflage dient. Gibt es genau drei solcher Befestigungsteile 50, die untereinander gleiche Abstände aufweisen können, dann wird so eine Dreipunktauflage für ein Innenteil 28 geschaffen. Das Befestigungsbauteil 50 kann eine Öffnung 52 umfassen, in die ein oberes Ende eines Stabs 25 hineingesteckt werden kann, um das Halten des Stabs 25 weiter zu stabilisieren. Das Befestigungsteil 50 kann einstückig gefertigt worden sein. Das Befestigungsbauteil 50 kann ein Gussteil sein, welches aus Metall bestehen kann. Ein jedes Befestigungsteil 50 kann zusammen mit dem Ring 22a einstückig gefertigt worden sein. Der Ring 22a mit zum Beispiel drei Befestigungsteilen kann in einem Stück beispielsweise als Gussteil gefertigt worden sein.

Der Ring 22a kann eine Stufe 53 auf der Oberseite umfassen. Die Stufe 53 des Rings 22a kann ringförmig verlaufen. Die Stufe 53 des Rings 22a kann das Innenteil 28 vor einem seitlichen Verrutschen schützen. Das Innenteil 28 kann eine nach unten abstehende Stufe 54 aufweisen, die nach innen versetzt sein kann. Die Stufe 54 des Innenteils 28 kann ringförmig verlaufen. Die Stufe 53 des Rings 22a kann gegenüber der Stufe 54 des Innenteils 28 wie gezeigt um 180° gedreht sein. Die beiden Stufen 53 und 54 können dann ineinandergreifen, um das Innenteil 28 vor einem seitlichen Verrutschen schützen. Es kann aber auch eine der beiden Stufen 53, 54 genügen, um vor einem Verrutschen zu schützen. Der Vorteil von zwei Stufen 53, 54 besteht jedoch darin, dass dann der Ring 22a und das Innenteil 28 den gleichen Außendurchmesser haben können.

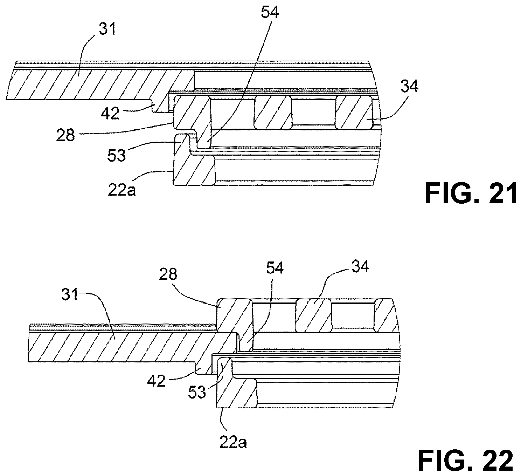

Die Figuren 20 und 21 verdeutlichen in einer Detailansicht den Vorteil der gleichen Außendurchmesser von Ring 22a und Innenteil 28. Es kann dann das Außenteil 31 erstens auf das Innenteil 28 so aufgesetzt werden, dass die ringförmige Verstärkungsrippe 42 um den Außenumfang des Innenteils 28 herum verläuft. Dies wird in der Figur 21 gezeigt. Es kann außerdem das Außenteil 31 zweitens auf den Ring 22a so aufgesetzt werden, dass die ringförmige Verstärkungsrippe 42 um den Außenumfang des Rings 22a herum verläuft. Dies wird in der Figur 22 gezeigt. In beiden Fällen ist das Außenteil in gleicher Weise vor einem Verrutschen geschützt. Außerdem kann das Innenteil 28 so auf das Außenteil 31 gesetzt werden, dass die Stufe 54 des Grillrosts 28 in die Öffnung des Außenteils 31 hineinreicht und so das Innenteil 28 vor einem Verrutschen schützt.

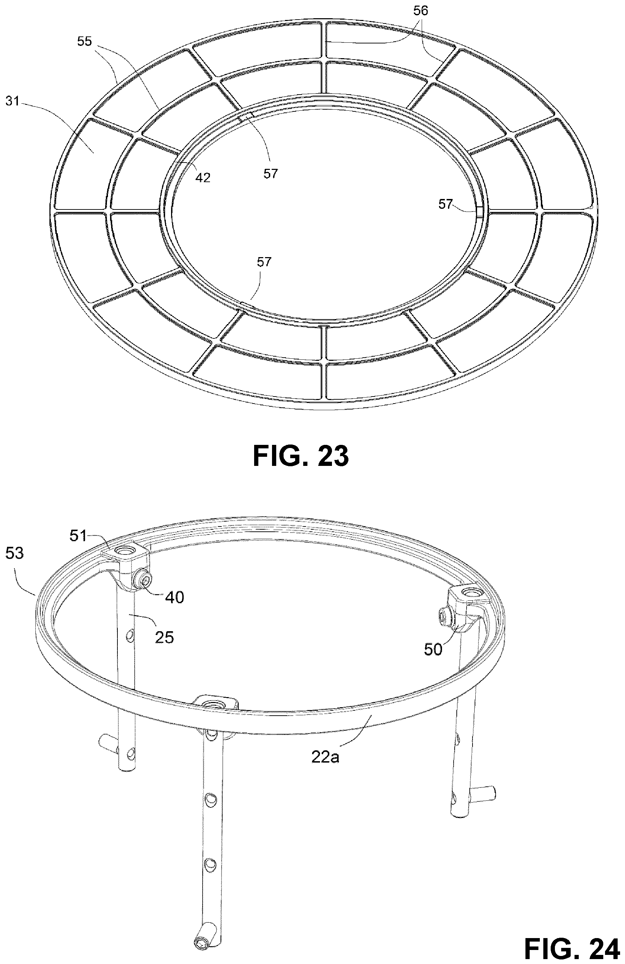

Die Figur 23 zeigt die Unterseite eines Außenteils 31. Auf der Unterseite können zusätzlich zu der Verstärkungsrippe 42 weitere Verstärkungsrippen 55 und 56 vorgesehen sein. Die Verstärkungsrippe 42, die beim Innenumfang des Außenteils 31 angeordnet sein kann, kann gegenüber den anderen Verstärkungsrippen weiter nach unten vorstehen, um besonders zuverlässig vor einem Verrutschen schützen zu können. Weitere Verstärkungsrippen 55 können ringförmig verlaufen. Die ringförmig verlaufenden Verstärkungsrippen 42 und 55 können untereinander gleiche Abstände aufweisen. Es können Verstärkungsrippen 56 radial verlaufen und können untereinander gleiche Abstände aufweisen. Beim Innenumfang können nach unten Auflagepunkte 57 abstehen, um eine Punktauflage zu ermöglichen. Es können genau drei Auflagepunkte 57 vorhanden sein, um eine stabile Drei-Punktauflage für das Außenteil 31 zu ermöglichen. Die Verstärkungsrippe 42 beim Innenumfang kann gegenüber den Auflagepunkten 57 vorstehen, um auch dann gegen ein Verrutschen schützen zu können, wenn das Außenteil 31 mit seinen Auflagepunkten beispielsweise auf dem Ring 22a oder auf dem Innenteil 28 aufliegt. Die Höhe der Verstärkungsrippe 42 kann beispielsweise wenigstens 1,5 mal so hoch oder wenigstens doppelt so hoch wie die Höhe eines jeden Auflagepunktes 57 sein, Ein jeder Auflagepunkt 57 kann an den Innenumfang der Verstärkungsrippe 42 angrenzen. Das Außenteil 31 kann einstückig gefertigt worden sein. Es sind also zu seiner Herstellung keine Teile zusammengefügt worden. Das Außenteil 31 kann ein Gussteil sein.

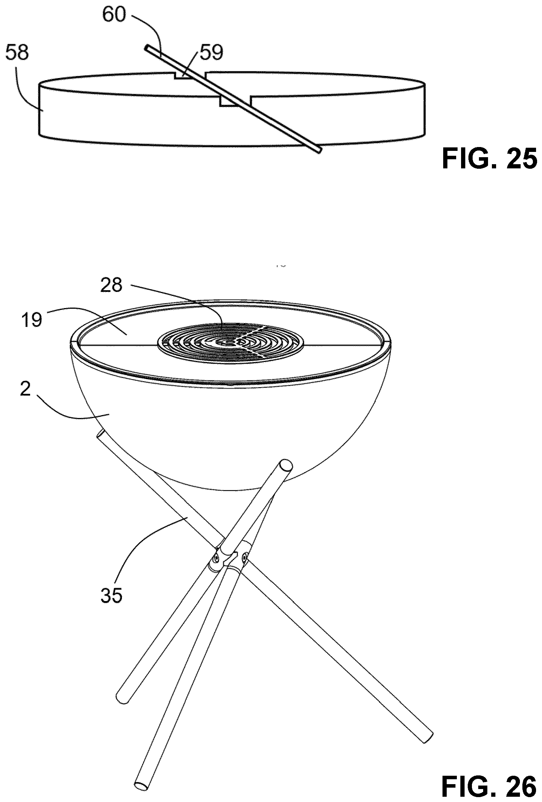

Die Figur 24 zeigt den Ring 22a mit integrierter Dreipunktauflage, die durch drei Erhöhungen 51 realisiert wird. Auf den Ring 22a kann ein in der Figur 25 gezeigter anderer Ring 58 aufgelegt werden, dessen Außendurchmesser geringfügig kleiner ist als der Innendurchmesser der Stufe 53. Der andere Ring 58 kann also durch die Stufe 53 gehalten werden. Die Höhe des anderen Rings 58 kann größer sein als die Höhe der Stufe 53. Der andere Ring 58 steht dann gegenüber der Stufe 53 hervor. Der andere Ring 58 kann auf den Erhöhungen 51 aufliegen. Der andere Ring 58 kann auf der Oberseite Einkerbungen oder anders geformte Vertiefungen 59 aufweisen, in die Spieße 60 hineingelegt werden können. Die Vertiefungen 59 können beispielsweise rechteckig sein. Es können mehr als zwei Einkerbungen oder Vertiefungen 59 vorhanden sein. Die Zahl der Einkerbungen bzw. Vertiefungen 59 können geradzahlig sein, damit für jeden Spieß 60 zwei Einkerbungen bzw. Vertiefungen 59 vorhanden sind.

Die Figur 26 zeigt ein Grillgerät mit erster Auflage 19 und eingesetztem Grillrost 28 und Dreibein 35 für ein Aufstellen des Grillgeräts.

## Patentansprüche

1. Grillgerät mit einem feuerfesten Behälter (2), mit einer ersten Auflage (19) und mit einer zweiten Auflage (22), wobei die erste Auflage (19) auf den feuerfesten Behälter (2) für die Zubereitung von Grillgut aufgelegt sein kann, wobei die erste Auflage eine Öffnung (20) hat, mit einer Abstandseinrichtung (24), mit der ein Abstand zwischen der ersten Auflage (19) und der zweiten Auflage (22) eingestellt werden kann.

2. Grillgerät nach Anspruch 1, **dadurch gekennzeichnet, dass** die Abstandseinrichtung (24) drei Stäbe (25) umfasst, von jedem Stab (25) ein Bolzen (26) absteht und die Stäbe (25) und die Bolzen (26) so angeordnet sind, dass die Bolzen (26) auf den Rand der Öffnung (20) der ersten Auflage (19) aufgelegt werden können und die Stäbe (25) dann in die Öffnung (20) hineinreichen.

3. Grillgerät nach dem vorhergehenden Anspruch, **dadurch gekennzeichnet, dass** die Bolzen (26) höhenverstellbar an den Stäben (25) befestigt sind.

4. Grillgerät nach einem der zwei vorhergehenden Ansprüche, **dadurch gekennzeichnet, dass** die zweite Auflage (22) aus einer Mehrzahl von Teilen besteht, wobei ein Teil ein Grillrost (28) ist, der so in eine Öffnung (29) der zweiten Auflage (22) eingesetzt oder auf eine Öffnung (29) der zweiten Auflage (22) gelegt werden kann, dass Streben (30) des Grillrosts (28) bei Stäben (25) der Abstandseinrichtung (24) enden.

5. Grillgerät nach einem der vorhergehenden Ansprüche, **dadurch gekennzeichnet, dass** die zweite Auflage (22) einen Ring (22a) umfasst.

6. Grillgerät nach dem vorhergehenden Anspruch, **dadurch gekennzeichnet, dass** die zweite Auflage (22) ein auf den Ring (22a) auflegbares flächiges Außenteil (31) umfasst, das im aufgelegten Zustand nach außen von dem Ring (22a) absteht.

7. Grillgerät nach einem der beiden vorhergehenden Ansprüche, **dadurch gekennzeichnet, dass** die zweite Auflage (22) ein flächiges Innenteil (28) umfasst, das im aufgelegten Zustand nach innen von dem Ring (22a) absteht.

8. Grillgerät nach dem vorhergehenden Anspruch, **dadurch gekennzeichnet, dass** das Innenteil (28) auf Stäben (25) der Abstandseinrichtung (24) für ein Grillen von Grillgut aufgelegt werden kann, die am Ring (22a) befestigt sind, oder auf an dem Ring (22a) angeordneten Bolzen (51).

9. Grillgerät nach einem der drei vorhergehenden Ansprüche, **dadurch gekennzeichnet, dass** für ein Grillen von Grillgut auf dem Außenteil und auf dem Innenteil das Innenteil (28) zuerst auf den Ring (22a) gelegt werden kann und im Anschluss daran das Außenteil (31) auf das Innenteil (28) gelegt werden kann oder dass das Außenteil (31) auf den Ring (22a) gelegt werden kann und im Anschluss daran das Innenteil (28) auf das Außenteil (31) gelegt werden kann.

10. Grillgerät nach einem der vorhergehenden Ansprüche, **dadurch gekennzeichnet, dass** die zweite Auflage (22) mehrteilig ist und es zumindest ein Teil (28) der zweiten Auflage (22) gibt, das auf die Öffnung (20) der ersten Auflage (19) so gebracht oder aufgelegt werden kann, dass das Teil (28) der zweiten Auflage (22) sich überwiegend innerhalb, oberhalb oder unterhalb der Öffnung (20) der ersten Auflage (19) befindet.

11. Grillgerät nach einem der vorhergehenden Ansprüche, **dadurch gekennzeichnet, dass** die erste Auflage (19) eine geschlossene Oberfläche aufweist
und/oder
dass die zweite Auflage (22) einen Bereich mit einer geschlossenen Oberfläche und einen Bereich aufweist, der durch einen Grillrost (28) gebildet ist.

12. Grillgerät nach dem vorhergehenden Anspruch, **dadurch gekennzeichnet, dass** ein umlaufender Randbereich (31) der zweiten Auflage (22) die geschlossene Oberfläche aufweist und dieser umlaufende Randbereich flächig auf eine umlaufende Fläche der zweiten Auflage (22) aufgelegt ist oder aufgelegt werden kann.

13. Grillgerät nach einem der vorhergehenden Ansprüche, **dadurch gekennzeichnet, dass** eine Schale (3) vorhanden ist, die in den feuerfesten Behälter (2) eingesetzt werden kann.

14. Auflage (22) für ein Grillgerät nach einem der vorhergehenden Ansprüche, **dadurch gekennzeichnet, dass** die Auflage (22) einen Ring (22a) mit daran befestigten, parallel verlaufenden Stäben (25) aufweist, wobei ein jeder Stab (25) einen seitlich abstehenden Bolzen (26) umfasst, der in unterschiedlicher Höhe an dem Stab (25) lösbar befestigt werden kann, wobei die Auflage (22) ein auf den Ring (22a) auflegbares flächiges Außenteil (31) umfasst, das im aufgelegten Zustand nach außen von dem Ring (22a) absteht und das eine geschlossene Oberfläche aufweist, und dass die Auflage (22) ein flächiges Innenteil umfasst, das auf den Ring (22a) oder auf an dem Ring (22a) befestigte Stäbe (25) aufgelegt werden kann und das im aufgelegten Zustand nach innen von dem Ring (22a) absteht, wobei das Innenteil ein Grillrost (28) ist.

15. Auflage nach dem vorhergehenden Anspruch, **dadurch gekennzeichnet, dass** das Außenteil (31) flächig auf dem Ring (22a) und/oder auf dem Innenteil (28) aufliegt oder aufliegen kann und/oder dass das Innenteil auf den Stäben (25) aufliegt oder aufliegen kann.
